Europäisches Patentamt

European Patent Office

Office européen des brevets

(19)

(11) **EP 0 493 355 B1**

(12) **FASCICULE DE BREVET EUROPEEN**

(45) Date de publication et mention
de la délivrance du brevet:
**10.04.1996 Bulletin 1996/15**

(51) Int Cl.6: **C08G 69/44**

(21) Numéro de dépôt: **91870210.1**

(22) Date de dépôt: **16.12.1991**

(54) **Polyestéramides contenant des groupes carboxyle terminaux**

Carboxylendgruppen enthaltende Polyesteramide

Polyester amides containing terminal carboxyl groups

(84) Etats contractants désignés:
**AT BE CH DE DK ES FR GB GR IT LI LU MC NL
SE**

(30) Priorité: **21.12.1990 GB 9027793**

(43) Date de publication de la demande:
**01.07.1992 Bulletin 1992/27**

(73) Titulaire: **U C B, S.A.**
**B-1050 Bruxelles (BE)**

(72) Inventeurs:
• **Moens, Luc**
**B-1640 Sint Genesius-Rode (BE)**
• **Maetens, Daniel**
**B-1080 Bruxelles (BE)**
• **Loutz, Jean-Marie**
**B-1160 Bruxelles (BE)**

(74) Mandataire: **Dusseldorp, Raymond et al**
**UCB S.A.**
**Département D.T.B.**
**33, rue d'Anderlecht**
**B-1620 Drogenbos (BE)**

(56) Documents cités:
**US-A- 4 501 879**

• **PATENT ABSTRACTS OF JAPAN vol. 9, no. 1
(C-259)(1724) 5 Jan. 1985 ; & JP-A-59155477**

**Description**

La présente invention se rapporte à des polyesteramides contenant des groupes carboxyle terminaux, à des compositions thermodurcissables en poudre à base de ces polyesteramides et de composés époxydés, de même qu'à des procédés pour les préparer.

L'invention concerne également l'utilisation de ces composés et de ces compositions pour la production de vernis et peintures en poudre se prêtant à l'application au pistolet pulvérisateur tribo-électrique.

Les compositions thermodurcissables en poudre sont entre autres largement employées comme peintures et vernis pour le revêtement des appareils électroménagers, des bicyclettes, des meubles de jardin, des accessoires de l'industrie automobile, etc..

Ces compositions thermodurcissables en poudre possèdent de nombreux avantages par rapport aux compositions thermodurcissables liquides pour les raisons suivantes :

a) elles ne contiennent pas de solvants. Par conséquent, on évite ainsi les problèmes d'intoxication, de pollution et d'incendie dus à l'emploi de solvants,
b) elles sont plus économiques, d'abord parce qu'on n'utilise pas de solvants, ensuite parce que l'excès de poudre thermodurcissable qui ne reste pas fixé sur le substrat à enduire au moment de l'application peut en principe être intégralement récupéré et recyclé, et
c) elles permettent la formation d'enduits épais en une seule couche qu'il n'est pas possible d'obtenir avec des compositions analogues contenant des solvants.

L'application de ces vernis et peintures en poudre sur l'objet conducteur de l'électricité à enduire se fait le plus souvent au moyen d'un pistolet pulvérisateur électrostatique. Dans cette technique d'application, on utilise un générateur de courant à haute tension produisant une différence de potentiel d'au moins 30 à 40.000 volts entre l'électrode du pistolet et l'objet à revêtir, relié à la terre. De ce fait, les particules de poudre projetées dans le champ électrique créé entre le pistolet et l'objet se chargent d'électricité électrostatique par collision avec l'air ionisé et se déposent sous forme d'un enduit régulier adhérant à la surface de l'objet. L'excédent de poudre projetée, qui n'adhère pas sur l'objet à cause de l'effet isolant des particules déjà retenues, peut être récupéré et recyclé. L'objet enduit est ensuite chauffé dans un four où est réalisée la réticulation du liant thermodurcissable de l'enduit; celui-ci acquiert ainsi ses propriétés mécaniques et chimiques définitives.

Bien qu'à l'heure actuelle ce procédé électrostatique constitue le procédé le plus couramment utilisé pour l'application des vernis et peintures en poudre, il présente néanmoins un certain nombre de désavantages. En effet, l'utilisation de courant à haute tension engendre des risques d'incendie et d'explosion (production d'étincelles) et pose des problèmes de sécurité pour la personne qui doit se servir du pistolet pulvérisateur. En outre, à cause de l'existence du champ électrique, des lignes de champ s'établissent entre le pistolet et l'objet. Il en résulte l'effet bien connu de cage de Faraday qui empêche la poudre chargée de recouvrir toute la surface de pièces de formes complexes. Il est par conséquent très difficile d'obtenir le revêtement uniforme de toute la surface de l'objet, particulièrement dans le cas d'objets de forme compliquée et creux tels que grilles, présentoirs, chaînes, matériel de jardin, clôtures, etc...

De plus, l'obtention de couches uniformes de peinture est souvent problématique, car la décharge des particules ionisées en détruisant la couche de particules précédemment déposées est à l'origine de piqûres dans les revêtements produits et d'une porosité accrue de ceux-ci.

Pour remédier à ces divers inconvénients, on a développé très récemment une nouvelle technique d'application par voie électrostatique faisant appel à la tribo-électricité, qui rencontre un succès de plus en plus grand. Dans cette technique, on applique les poudres sur l'objet à enduire au moyen d'un pistolet pulvérisateur tribo-électrique, dans lequel la charge électrostatique des particules de poudre est acquise à l'intérieur du pistolet par frottement lors du passage de la poudre à travers un (ou des) tube(s) en un matériau approprié, généralement à base de polytétrafluoroéthylène. Contrairement au pistolet pulvérisateur traditionnel à électrodes, les particules de poudre se chargent donc ici d'électricité électrostatique par friction des particules contre les parois des tubes en matière plastique du pistolet. Cette friction conduit la poudre à céder des électrons et chaque particule prend ainsi une charge positive. Dans un équipement de chargement tribo-électrique de ce type, la pulvérisation de la poudre est réalisée au moyen d'un lit fluidisé relié au pistolet. Les particules de poudre chargées d'électricité par friction sont ensuite dirigées au moyen d'un courant d'air comprimé vers les parties de l'objet que l'on désire revêtir et, attirées par la mise à la terre de l'objet, elles se déposent sous forme d'un enduit régulier adhérant à la surface de l'objet. D'autre part, l'excédent de poudre qui n'adhère pas sur l'objet à cause de l'effet isolant des particules déjà retenues, peut être récupéré et recyclé exactement comme dans le procédé électrostatique traditionnel décrit plus haut.

Par rapport au procédé d'application au moyen du pistolet pulvérisateur électrostatique conventionnel, le procédé utilisant le pistolet tribo-électrique apporte une série d'avantages importants. On peut citer entre autres :

- l'absence d'électrode(s) et de générateur de courant à haute tension et donc l'existence de plus de sécurité lors de l'usage du pistolet;
- l'absence de champ électrique et, par conséquent, d'effets de cage de Faraday;
- la possibilité de revêtir plus uniformément des objets de forme compliquée ou creuse et de pénétrer dans les coins, derrière les rebords et jusqu'aux cavités profondes grâce précisément à l'absence des effets de cage de Faraday;
- la réalisation de couches de peinture beaucoup plus uniformes, même de forte épaisseur allant jusqu'à 350-450 micromètres;
- la réalisation de couches de peinture moins poreuses et sans piqûres;
- le cas échéant, la suppression d'un ou plusieurs postes de retouches.

Toutefois, une difficulté majeure du procédé tribo-électrique est que toutes les compositions thermodurcissables en poudre ne peuvent convenir pour l'obtention de revêtements avec projection par un pistolet pulvérisateur tribo-électrique. En effet, il existe beaucoup de compositions en poudre qui ne se chargent pas ou n'acquièrent qu'une charge électrostatique très faible dans un pistolet tribo-électrique dont les surfaces de friction sont en un matériau à base de polytétrafluoroéthylène. Seules quelques compositions comme par exemple celles contenant comme liants des résines époxy associées au dicyandiamide conviennent réellement. C'est ainsi que les compositions thermodurcissables en poudre à base de polyesters contenant des groupes carboxyle terminaux et de composés époxydés, qui sont utilisés avec succès depuis de nombreuses années en appliquant le procédé électrostatique traditionnel, ne sont pas adaptées pour l'obtention de revêtements par le procédé tribo-électrique. En effet, les compositions à base de ces polyesters ne se chargent pratiquement pas par frottement sur une surface en polytétrafluoroéthylène.

Pour résoudre ce problème, il a été proposé d'ajouter des additifs particuliers à ces compositions thermodurcissables en poudre, dont le but est de rendre ces compositions susceptibles d'acquérir une charge électrostatique plus grande autorisant une application au pistolet pulvérisateur tribo-électrique. C'est ainsi que dans les demandes de brevet allemand 3.600.395 et 3.725.738, on préconise l'adjonction d'amines tertiaires et de sels d'ammonium quaternaires comme par exemple la triéthylamine et le sulfate de lauryltrialkylammonium. Dans la demande de brevet européen 260.638, on décrit des compositions en poudre pour l'obtention de revêtements par un procédé électrostatique, où l'on ajoute aux compositions un agent augmentant la charge électrique tel que des complexes métalliques de composés azo, des composés de phtalocyanine, etc., tandis que dans la demande de brevet européen 300.818, on propose d'ajouter aux compositions de l'oxyde et/ou de l'hydroxyde d'aluminium.

Mais si l'addition des additifs précités aux compositions thermodurcissables en poudre permet effectivement d'augmenter la charge électrostatique des particules de poudre dans les pistolets tribo-électriques, la présence de ces additifs dans les poudres amène aussi une série d'autres difficultés techniques importantes que l'on n'est pas encore parvenu à résoudre jusqu'ici. En premier lieu, il se produit fréquemment des bouchages des filtres à air de l'équipement de chargement tribo-électrique, ce qui conduit à un arrêt périodique de l'appareillage pour cause de nettoyage. De plus, certains additifs ont un effet catalytique indésirable sur la réaction de réticulation qui est à l'origine d'un jaunissement et/ou d'un aspect de peau d'orange des films de vernis et de peinture obtenus après cuisson.

Il reste donc intéressant de mettre au point de nouveaux liants contenant des groupes carboxyle, durcissables au moyen de composés époxydés, qui puissent être formulés en des compositions en poudre susceptibles d'être chargées d'électricité électrostatique dans un pistolet pulvérisateur tribo-électrique et qui permettent l'obtention de revêtements par le procédé tribo-électrique sans avoir à recourir à l'emploi des additifs tels que décrits plus haut, tout en produisant des enduits de peinture et de vernis possédant des propriétés au moins égales aux enduits correspondants obtenus à partir des compositions de l'état de la technique à base de polyesters contenant des groupes carboxyle terminaux et de composés époxydés, appliquées au pistolet pulvérisateur électrostatique conventionnel.

Dès lors, un objet de la présente invention est de procurer de nouveaux liants contenant des groupes carboxyle terminaux durcissables au moyen de composés époxydés qui peuvent être utilisés efficacement dans les compositions de revêtement en poudre à appliquer au pistolet pulvérisateur tribo-électrique et plus particulièrement de procurer des compositions de revêtement thermodurcissables en poudre se prêtant à l'application au pistolet pulvérisateur tribo-électrique sans qu'il soit nécessaire d'y adjoindre un additif particulier.

Ces objets, ainsi que d'autres objets de la présente invention qui apparaîtront à la lecture de la présente spécification, sont atteints par la présente invention qui se rapporte à des polyesteramides contenant des groupes carboxyle terminaux, comprenant les produits de réaction d'au moins une diamine et d'un polyester contenant des groupes carboxyle terminaux, ledit polyester contenant des groupes carboxyle terminaux étant choisi parmi

(a) un polyester préparé à partir d'au moins un acide dicarboxylique et/ou cycloaliphatique et d'au moins un polyol;
(b) un polyester qui est le produit de réaction de

(i) au moins un acide dicarboxylique choisi parmi les acides dicarboxyliques aliphatiques, les acides dicarboxyliques cycloaliphatiques et l'acide isophtalique, avec
(ii) un polyester contenant des groupes hydroxyle terminaux préparé à partir d'au moins un acide polycarboxylique aromatique et/ou aliphatique et/ou cycloaliphatique et d'au moins un polyol ; et

(c) un polyester qui est le produit de réaction de

(i) au moins un acide dicarboxylique aliphatique et/ou cycloaliphatique avec
(ii) un polyester contenant à la fois des groupes hydroxyle et carboxyle terminaux préparé par estérification de
(iii) l'acide isophtalique avec
(iv) un polyester contenant des groupes hydroxyle terminaux préparé à partir d'au moins un acide polycarboxylique aromatique et/ou aliphatique et/ou cycloaliphatique et d'au moins un polyol.

Les polyesteramides contenant des groupes carboxyle terminaux conformes à l'invention présentent de préférence un indice d'acide de 10 à 100 mg de KOH/g, avantageusement de 20 à 70 mg de KOH/g et un poids moléculaire moyen en nombre compris entre 1.000 et 16.000, de préférence entre 1.500 et 8.500.

La caractéristique essentielle des polyesteramides contenant des groupes carboxyle terminaux conformes à l'invention est la présence obligatoire dans chaque molécule de liaisons esters et de liaisons amides. En effet, ce sont précisément les liaisons amides qui sont à l'origine du comportement favorable de ces composés en ce qui concerne les caractéristiques de chargement tribo-électrique des poudres formulées avec eux. C'est aussi la raison pour laquelle les polyesteramides à groupes carboxyle terminaux conformes à l'invention doivent obligatoirement être obtenus en deux stades en préparant d'abord un polyester contenant des groupes carboxyle terminaux et en faisant réagir ensuite le polyester ainsi obtenu avec une diamine. En effet, lorsqu'on tente de préparer ces polyesteramides en un seul stade, en faisant réagir ensemble tous les constituants nécessaires à leur préparation (c'est-à-dire, diamines, acides polycarboxyliques et polyols), on obtient, non pas le polyesteramide souhaité, mais un mélange hétérogène contenant un polyamide, un polyester et les matières de départ n'ayant pas réagi, lequel mélange est inutilisable pour la formulation de poudres se prêtant à une application par le procédé tribo-électrique.

Les polyesteramides contenant des groupes carboxyle terminaux conformes à l'invention ont donc une chaîne polymère qui renferme à la fois des groupements esters et des groupements amides, ce qui confère à ces composés les propriétés voulues pour que, lorsqu'ils sont utilisés comme liants conjointement avec des composés époxydés, ils fournissent des vernis et des peintures en poudre aptes à être utilisés pour l'obtention de revêtements au moyen d'un pistolet pulvérisateur tribo-électrique.

Ceci constitue donc un premier avantage très important par rapport aux polyesters contenant des groupes carboxyle terminaux de l'état de la technique qui requièrent toujours l'adjonction d'additifs particuliers, avec tous les inconvénients qui ont été rappelés plus haut.

Pour préparer les polyesteramides contenant des groupes carboxyle terminaux, on dispose de plusieurs procédés :

I. Procédé en deux stades.

(1) On prépare d'abord un polyester contenant des groupes carboxyle terminaux, à chaîne linéaire ou ramifiée, à partir d'au moins un acide dicarboxylique aliphatique et/ou cycloaliphatique et d'au moins un polyol dans les proportions molaires requises pour obtenir la terminaison des extrémités de la chaîne par un groupe carboxyle, et
(2) on termine la préparation des polyesteramides conformes à l'invention en faisant réagir le polyester contenant des groupes carboxyle terminaux préparé en I(1) avec au moins une diamine.

Comme acide dicarboxylique aliphatique ou cycloaliphatique servant à la préparation du polyester contenant des groupes carboxyle terminaux en I(1), on peut citer l'acide adipique, l'acide succinique, l'acide glutarique, l'acide sébacique, l'acide azélaïque, les acides 1,2-, 1,3- et 1,4-cyclohexanedicarboxyliques, l'acide tétrahydrophtalique, l'acide hexahydrophtalique et leurs anhydrides, seuls ou en mélange.

Le polyol est de préférence un polyol aliphatique, cycloaliphatique ou aromatique dihydroxylé à tétrahydroxylé. Il est avantageusement choisi parmi les diols comme le néopentylglycol, l'éthylèneglycol, le diéthylèneglycol, le 1,2-propanediol, le 1,3-propanediol, le 1,4-butanediol, le 1,5-pentanediol, le 1,6-hexanediol, l'hydroxypivalate de néopentylglycol, le bisphénol A, le 1,4-cyclohexanediméthanol ou le 2,2-bis(4-hydroxycyclohexyl)-propane, seuls ou en mélange.

Le polyol particulièrement préféré est le néopentylglycol. L'utilisation de ces diols permet de préparer des polyesters à chaîne linéaire. Pour la préparation de polyesters ramifiés on utilise, outre les diols précités, avantageusement des polyols trihydroxylés ou tétrahydroxylés tels que le triméthylolpropane, le di-triméthylolpropane ou le pentaérythritol.

La quantité en poids d'acide dicarboxylique aliphatique et/ou cycloaliphatique par rapport à la quantité en poids de polyol utilisée pour la synthèse du polyester contenant des groupes carboxyle terminaux en I(1) est telle que l'indice d'acide du polyester obtenu est de préférence de 20 à 200 mg de KOH/g, avantageusement de 30 à 110 mg de KOH/g.

La diamine utilisée pour la préparation des polyesteramides contenant des groupes carboxyle terminaux en I(2) peut être une diamine diprimaire, disecondaire ou à la fois primaire et secondaire, de préférence une diamine diprimaire. Cette diamine peut être aliphatique, cycloaliphatique ou aromatique, de préférence aliphatique ou cycloaliphatique.

Des exemples de diamines utilisables sont l'éthylènediamine, la 1,3-propanediamine, la 1,5-pentanediamine, la 1,6-hexanediamine, les 1,2-, 1,3- et 1,4-cyclohexanediamines, la 2,2-diméthyl-1,3-propanediamine, la N-(2-aminoéthyl)-1,2-éthanediamine, le 3,3'-diméthyl-4,4'-diaminodicyclohexylméthane, le 4,4'-diaminodicyclohexylméthane, le 3,3'-diméthyl-4,4'-diaminodiphénylméthane ou le 4,4'-diaminodiphénylméthane, seuls ou en mélange.

La quantité en poids de diamine par rapport à la quantité en poids de polyester contenant des groupes carboxyle terminaux utilisée en I(2) est telle que l'indice d'acide du polyesteramide contenant des groupes carboxyle terminaux est de 10 à 100 mg de KOH/g et de préférence de 20 à 70 mg de KOH/g. L'utilisation d'un nombre d'équivalents de groupes amino de la diamine qui est déficitaire par rapport au nombre d'équivalents de groupes carboxyle dans le polyester contenant des groupes carboxyle terminaux est à recommander pour que le polyesteramide final ne contienne pas de groupes amino libres.

II. Procédé en trois stades.

(1) On prépare d'abord un polyester contenant des groupes hydroxyle terminaux, à chaîne linéaire ou ramifiée, à partir d'au moins un acide polycarboxylique aromatique et/ou aliphatique et/ou cycloaliphatique et d'au moins un polyol dans les proportions requises pour obtenir la terminaison des extrémités de la chaîne par un groupe hydroxyle,

(2) on estérifie le polyester contenant des groupes hydroxyle terminaux préparé en II(1) avec au moins un acide dicarboxylique choisi parmi les acides dicarboxyliques aliphatiques, les acides dicarboxyliques cycloaliphatiques et l'acide isophtalique, ce qui permet de préparer un polyester contenant des groupes carboxyle terminaux, et

(3) on termine la préparation des polyesteramides conformes à l'invention en faisant réagir le polyester contenant des groupes carboxyle terminaux préparé en II(2) avec au moins une diamine. L'acide polycarboxylique servant à la préparation du polyester contenant des groupes hydroxyle terminaux en II(1) est de préférence un acide aromatique, des exemples de ceux-ci étant l'acide o-phtalique, l'acide isophtalique et l'acide téréphtalique. Cependant, on peut également remplacer ces acides aromatiques, partiellement ou totalement, par des acides polycarboxyliques aliphatiques ou cycloaliphatiques tels que l'acide adipique, l'acide succinique, l'acide azélaïque, l'acide 1,4-cyclohexanedicarboxylique, l'acide tétrahydrophtalique, l'acide hexahydrophtalique et leurs anhydrides, seuls ou en mélange. L'acide polycarboxylique particulièrement préféré est l'acide téréphtalique.

Le polyol utilisé en II(1) peut être un polyol quelconque choisi parmi ceux mentionnés précédemment pour la préparation du polyester contenant des groupes carboxyle terminaux en I(1) dans le procédé en deux stades, de préférence le néopentylglycol. Pour la préparation de polyesters ramifiés, on utilise soit des polyols tri- ou tétrahydroxylés comme ceux cités plus haut, soit des acides tri- ou tétracarboxyliques tels que l'acide (ou anhydride) 1,2,4-benzènetricarboxylique ou l'acide 1,3,5-benzènetricarboxylique. La ramification est de préférence introduite à ce stade de la synthèse.

La quantité en poids de polyol par rapport à la quantité en poids d'acide polycarboxylique utilisée pour la synthèse du polyester contenant des groupes hydroxyle terminaux en II(1) est telle que l'indice d'hydroxyle du polyester obtenu est de préférence de 30 à 400 mg de KOH/g, avantageusement de 50 à 150 mg de KOH/g.

L'acide dicarboxylique aliphatique ou cycloaliphatique utilisé en II(2) peut être un acide dicarboxylique quelconque choisi parmi ceux mentionnés précédemment pour la préparation du polyester contenant des groupes carboxyle terminaux en I(1) dans le procédé en deux stades.

La quantité en poids d'acide dicarboxylique par rapport à la quantité en poids de polyester contenant des groupes hydroxyle terminaux utilisée pour la synthèse du polyester contenant des groupes carboxyle terminaux en II(2) est telle que l'indice d'acide du polyester obtenu est de préférence de 20 à 200 mg de KOH/g, avantageusement de 30 à 110 mg de KOH/g.

Il est également possible de se servir de l'acide isophtalique en II(2), mais uniquement à la condition que l'indice d'acide du polyester contenant des groupes carboxyle terminaux obtenu soit égal ou inférieur à 50 mg de KOH/g.

La diamine utilisée en II(3) peut être une diamine quelconque choisie parmi celles mentionnées précédemment pour la préparation du polyesteramide contenant des groupes carboxyle terminaux en I(2) dans le procédé en deux stades.

La quantité en poids de diamine par rapport à la quantité en poids de polyester contenant des groupes carboxyle terminaux utilisée en II(3) est telle que l'indice d'acide du polyesteramide contenant des groupes carboxyle terminaux est de 10 à 100 mg de KOH/g et de préférence de 20 à 70 mg de KOH/g.

III. Procédé en quatre stades.

(1) On prépare d'abord un polyester contenant des groupes hydroxyle terminaux, à chaîne linéaire ou ramifiée, à partir d'au moins un acide polycarboxylique aromatique et/ou aliphatique et/ou cycloaliphatique et d'au moins un polyol dans les proportions requises pour obtenir la terminaison des extrémités de la chaîne par un groupe hydroxyle;

(2) on estérifie le polyester contenant des groupes hydroxyle terminaux préparé en III(1) avec de l'acide isophtalique dans les proportions requises pour obtenir un polyester contenant à la fois des groupes hydroxyle et carboxyle terminaux;

(3) on estérifie le polyester contenant à la fois des groupes hydroxyle et carboxyle terminaux préparé en III(2) avec au moins un acide dicarboxylique aliphatique et/ou cycloaliphatique, ce qui permet de préparer un polyester contenant des groupes carboxyle terminaux, et

(4) on termine la préparation du polyesteramide conforme à l'invention en faisant réagir le polyester contenant des groupes carboxyle terminaux préparé en III(3) avec au moins une diamine.

L'acide polycarboxylique utilisé en III(1) peut être un acide polycarboxylique quelconque choisi parmi ceux mentionnés précédemment pour la préparation du polyester contenant des groupes hydroxyle terminaux en II(1) dans le procédé en trois stades. L'acide polycarboxylique particulièrement préféré est l'acide téréphtalique.

Le polyol utilisé en III(1) peut être un polyol quelconque choisi parmi ceux mentionnés précédemment pour la préparation du polyester contenant des groupes carboxyle terminaux en I(1) dans le procédé en deux stades, de préférence le néopentylglycol. La quantité en poids de polyol par rapport à la quantité en poids d'acide polycarboxylique utilisée pour la synthèse du polyester contenant des groupes hydroxyle terminaux en III(1) est telle que l'indice d'hydroxyle du polyester obtenu est de préférence de 30 à 400 mg de KOH/g, avantageusement de 50 à 150 mg de KOH/g.

La quantité en poids d'acide isophtalique par rapport à la quantité en poids de polyester contenant des groupes hydroxyle terminaux utilisée pour la synthèse du polyester contenant à la fois des groupes hydroxyle et carboxyle terminaux en III(2) est telle que la différence entre l'indice d'hydroxyle et l'indice d'acide du polyester obtenue est de préférence comprise entre -100 et +100 mg de KOH/g, avantageusement entre -50 et +50 mg de KOH/g.

L'acide dicarboxylique aliphatique ou cycloaliphatique utilisé en III(3) peut être un acide dicarboxylique quelconque choisi parmi ceux mentionnés précédemment pour la préparation du polyester contenant des groupes carboxyle terminaux en I(1) dans le procédé en deux stades.

Le rapport molaire entre l'acide dicarboxylique aliphatique et/ou cycloaliphatique utilisé en III(3) et l'acide isophtalique utilisé en III(2) peut varier de 1/99 à 99/1.

La quantité en poids d'acide dicarboxylique par rapport à la quantité en poids de polyester contenant à la fois des groupes hydroxyle et des groupes carboxyle terminaux utilisée pour la synthèse du polyester contenant des groupes carboxyle terminaux en III(3) est telle que l'indice d'acide du polyester obtenu est de préférence de 20 à 200 mg de KOH/g, avantageusement de 30 à 110 mg de KOH/g.

La diamine utilisée en III(4) peut être une diamine quelconque choisie parmi celles mentionnées précédemment pour la préparation du polyesteramide contenant des groupes carboxyle terminaux.

La quantité en poids de diamine par rapport à la quantité en poids de polyester contenant des groupes carboxyle terminaux utilisée en III(4) est telle que l'indice d'acide du polyesteramide contenant des groupes carboxyle terminaux est de 10 à 100 mg de KOH/g et de préférence de 20 à 70 mg de KOH/g.

Pour le bon déroulement de la synthèse en quatre stades, il est recommandable que le nombre d'équivalents de groupes amino de la diamine ne dépasse pas le nombre d'équivalents de groupes carboxyle de l'acide dicarboxylique aliphatique ou cycloaliphatique utilisé en III(3).

Les procédés préférés sont les procédés en trois et quatre stades.

Pour la préparation des polyesteramides contenant des groupes carboxyle terminaux, on utilise en général un réacteur classique muni d'un agitateur, d'une arrivée et d'une sortie de gaz inerte (azote), d'un thermocouple, d'une colonne adiabatique, d'un condenseur, d'un séparateur d'eau et d'un tube de raccordement au vide.

Les conditions d'estérification utilisées pour la préparation des polyesters intermédiaires sont classiques, à savoir que l'on peut utiliser un catalyseur d'estérification usuel, tel que l'oxyde de dibutylétain, le trioctoate de n-butylétain, le dilaurate de dibutylétain, à raison de 0,01 à 0,5% en poids des réactifs, et ajouter éventuellement un antioxydant, par exemple le phosphite de triphényle, à raison de 0,01 à 0,5% en poids des réactifs.

La polyestérification est généralement effectuée à une température que l'on augmente progressivement de 130°C à environ 200 à 240°C, d'abord sous la pression normale, puis sous pression réduite en maintenant ces conditions opératoires jusqu'à obtention d'un polyester présentant l'indice d'hydroxyle et/ou d'acide désiré. Le degré d'estérification est suivi par détermination de la quantité d'eau formée au cours de la réaction et des propriétés du polyester obtenu, par exemple l'indice d'hydroxyle, l'indice d'acide, le poids moléculaire ou la viscosité.

La réaction entre le polyester contenant des groupes carboxyle terminaux et la diamine est effectuée avantageusement en ajoutant la quantité appropriée de la diamine au polyester se trouvant à l'état fondu dans le réacteur décrit plus haut et chauffage du mélange à des températures de 180 à 240°C, d'abord sous la pression normale et ensuite sous pression réduite jusqu'à obtention d'un polyesteramide contenant des groupes carboxyle terminaux ayant l'indice d'acide désiré, lequel peut varier entre 10 et 100 mg de KOH/g, et le poids moléculaire désiré, lequel peut varier de préférence entre 1.500 et 8.500.

La quantité de diamine mise en oeuvre peut varier entre 1 et 20 parties en poids, de préférence de 1 à 10 parties en poids pour 100 parties de polyesteramide contenant des groupes carboxyle terminaux final à obtenir.

Suivant la nature du polyesteramide ainsi obtenu, on ajoute éventuellement à la fin de la synthèse une faible quantité d'un catalyseur de réticulation de type amine, phosphine, sel d'ammonium ou de phosphonium et des stabilisants connus en soi. On donnera plus loin des exemples détaillés de la préparation des polyesteramides de l'invention.

Au terme de la synthèse, le polyesteramide contenant des groupes carboxyle terminaux est coulé en une couche épaisse, on le laisse refroidir et on le broie en grains ayant une dimension moyenne allant d'une fraction de mm à quelques mm.

Les polyesteramides contenant des groupes carboxyle terminaux conformes à l'invention sont des produits solides à la température ordinaire qui présentent une température de transition vitreuse comprise entre 50 et 70°C. A l'état liquide, ces produits présentent des viscosités relativement élevées, allant de 100 à 10.000 mPa.s mesurées à 200°C au moyen d'un viscosimètre à cône et plaque (viscosité ICI telle que décrite par P.S. POND et C.H. MONK dans J.Oil Col.Chem.Assoc.,53,(1970),876-883; ASTM D4287-88).

Les polyesteramides conformes à l'invention sont destinés à servir principalement comme liants, conjointement avec des composés époxydés, dans la préparation de compositions thermodurcissables en poudre utilisables notamment comme vernis et peintures se prêtant à une application au pistolet pulvérisateur tribo-électrique.

C'est pourquoi, la présente invention se rapporte également à des compositions thermodurcissables en poudre comprenant

(a) un polyesteramide contenant des groupes carboxyle terminaux conformes à l'invention et
(b) un composé polyépoxydé.

La présente invention se rapporte en outre à l'utilisation des compositions thermodurcissables conformes à l'invention pour la préparation de vernis et peintures en poudre, ainsi qu'aux vernis et peintures en poudre obtenus à l'aide de ces compositions.

Enfin, elle se rapporte également à un procédé de revêtement d'un article, de préférence métallique, qui est caractérisé par l'application sur ledit article d'une composition thermodurcissable conforme à l'invention par pulvérisation, de préférence au moyen d'un pistolet pulvérisateur tribo-électrique, suivie d'une cuisson du revêtement ainsi obtenu.

Les composés polyépoxydés que l'on peut utiliser pour la préparation des compositions thermodurcissables en poudre conformes à l'invention sont les composés polyépoxydés conventionnellement utilisés dans ce type de compositions. Des composés de ce type sont décrits par exemple dans le brevet américain 4.085.159.

Les composés polyépoxydés préférés sont des produits solides à la température ordinaire, qui contiennent en moyenne, au moins deux groupes époxy par molécule, comme par exemple les résines époxy solides à base de bisphénol A et d'épichlorhydrine, c'est-à-dire l'éther diglycidylique de bisphénol A et ses produits d'addition à poids moléculaire plus élevé. Des exemples de ces résines époxy sont les résines Epikote commercialisées par la société SHELL, les résines Araldite commercialisées par la société CIBA-GEIGY, comme celle vendue sous le nom commercial d'Araldite GT 7004, les résines DER commercialisées par la société DOW CHEMICAL, etc... . Un composé polyépoxydé particulièrement préféré est l'isocyanurate de triglycidyle comme celui vendu par la société CIBA-GEIGY sous le nom commercial d'Araldite PT 810.

Le composé polyépoxydé peut être utilisé à raison de 0,7 à 1,3, de préférence de 0,95 à 1,05 équivalent de groupes époxy par équivalent de groupes carboxyle dans le polyesteramide contenant des groupes carboxyle terminaux.

Pour la préparation des compositions thermodurcissables en poudre, on mélange de manière homogène le polyesteramide contenant des groupes carboxyle terminaux, le composé polyépoxydé et les diverses substances auxiliaires utilisées conventionnellement pour la fabrication de peinture et vernis en poudre. Cette homogénéisation est exécutée par exemple en fondant le polyesteramide, le composé polyépoxydé et les diverses substances auxiliaires à une température située dans l'intervalle de 90 à 100°C, de préférence dans une extrudeuse, par exemple une extrudeuse Buss-Ko-Kneter ou une extrudeuse à double vis de type Werner-Pfleiderer ou Baker Perkins. Ensuite, on laisse refroidir l'extrudat, on le broie et on le tamise pour obtenir une poudre dont la dimension des particules est comprise entre 25 et 100 micromètres.

Les substances auxiliaires qui peuvent être ajoutées aux compositions thermodurcissables en poudre sont par exemple des pigments comme le dioxyde de titane ou les oxydes de fer, des colorants organiques, etc. des charges comme le sulfate de baryum ou le sulfate ou carbonate de calcium, des agents régulateurs de fluidité comme le Resiflow PV5 (de WORLEE) ou le Modaflow (de MONSANTO), ou l'Acronal 4f (de BASF), des plastifiants comme le phtalate de dicyclohexyle, le phosphate de triphényle, des agents auxiliaires de broyage, et des catalyseurs de réticulation connus en soi de type amine, phosphine, sels d'ammonium ou de phosphonium. Ces substances auxiliaires sont utilisées en les quantités usuelles, étant entendu que si les compositions thermodurcissables conformes à l'invention sont utilisées comme vernis, on omettra l'addition de substances auxiliaires ayant des propriétés opacifiantes.

Les peintures et vernis en poudre faisant l'objet de la présente invention sont surtout destinés à être appliqués sur l'article à revêtir par pulvérisation au moyen d'un équipement de chargement tribo-électrique comme par exemple le système TRIBOMATIC-NORDSON de la société NORDSON ou le système IDEAL de la société IDEAL. Cependant, compte tenu de la nature de ces compositions thermodurcissables en poudre, il est évident qu'elles conviennent à fortiori aussi pour une application par les techniques traditionnelles, c'est-à-dire par application au pistolet pulvérisateur dans un champ électrostatique ou par la technique bien connue du dépôt en lit fluidisé.

Après avoir été appliqués sur l'article concerné, les revêtements déposés sont durcis par cuisson au four à une température de 140 à 220°C, de préférence de 160 à 200°C, pendant une durée pouvant atteindre 30 minutes en vue d'obtenir la réticulation complète du revêtement.

Comme on le montre plus en détails dans les exemples qui vont suivre, il est possible de préparer les polyesteramides conformes à l'invention selon trois voies de synthèse différentes. Ceci permet donc de modifier à volonté les propriétés chimiques, physiques et technologiques de ces composés en vue de les adapter à leurs applications futures, simplement en faisant varier le mode de synthèse. En effet, le choix d'une voie de synthèse déterminée sera fonction des caractéristiques exigées du produit final tels que l'indice d'acide, la fonctionnalité, la viscosité, la température de transition vitreuse et des qualités des revêtements désirées. En d'autres termes, une caractéristique avantageuse des polyesteramides conformes à l'invention est qu'ils peuvent être préparés "sur mesure", en fonction de l'application commerciale à laquelle ils sont destinés.

Par ailleurs, comme on le verra plus particulièrement à l'exemple 27, les compositions thermodurcissables en poudre conformes à l'invention sont douées d'excellentes propriétés tribo-électriques. De plus, les revêtements durcis obtenus avec ces compositions possèdent un ensemble de propriétés favorables, tant en ce qui concerne leur aspect (brillant et étalement) et leurs propriétés mécaniques qu'en ce qui concerne leur résistance aux intempéries (cf exemple 28). Ces propriétés sont d'ailleurs en tout point comparables à celles obtenues à partir des compositions à base de polyesters de l'état de la technique, mais appliquées au pistolet pulvérisateur dans un champ électrique.

Les exemples qui vont suivre illustrent l'invention sans la limiter. Dans ceux-ci, les parties sont en poids, sauf indication contraire.

Dans les tableaux I, II et III, les différents composés utilisés pour la préparation des polyesteramides et des polyesters introduits à titre comparatifs, sont désignés par les abréviations suivantes :

| | |
|---|---|
| ATP: | acide téréphtalique. |
| AIP: | acide isophtalique. |
| AdA: | acide adipique. |
| CHDA: | acide 1,4-cyclohexanedicarboxylique. |
| 1,3,5BTA: | acide 1,3,5-benzènetricarboxylique. |
| 1,2,4BTA: | acide 1,2,4-benzènetricarboxylique. |
| AnHHP: | anhydride hexahydrophtalique. |
| AnTM: | anhydride trimellitique. |
| NPG: | néopentylglycol. |
| TMP: | triméthylolpropane. |
| dTMP: | di-triméthylolpropane. |
| PE: | pentaérythritol. |
| EG: | éthylèneglycol. |
| HPN: | hydroxypivalate de néopentylglycol. |
| DADCHM: | 4,4′-diaminodicyclohexylméthane. |
| DMPDA: | 2,2-diméthyl-1,3-propanediamine. |
| DMDACHM: | 3,3′-diméthyl-4,4′-diaminodicyclohexylméthane. |
| DACH: | 1,4-cyclohexanediamine. |
| HMDA: | 1,6-hexanediamine. |
| BPA: | bisphénol A hydrogéné |

Exemples 1 à 4 : Synthèse de polyesteramides en deux stades.

(1) 1er stade

Dans un réacteur conventionnel, muni d'un agitateur, d'une arrivée de gaz inerte (azote), d'un thermocouple, d'une colonne adiabatique, d'un condenseur, d'un séparateur d'eau et d'un tube de raccordement au vide, on introduit 282 parties de néopentylglycol et 58,5 parties de triméthylolpropane. On chauffe à 130°C jusqu'à ce que les produits soient fondus et on introduit alors 724 parties d'acide 1,4-cyclohexanedicarboxylique et 2,7 parties d'oxyde de dibutylétain comme catalyseur d'estérification. Puis, on élève progressivement la température du mélange réactionnel à 220°C.

Lorsque 95% de l'eau d'estérification a distillé et que le polyester est tout à fait clair, la pression est abaissée progressivement en une heure de la pression normale à 50 mm Hg. On poursuit l'opération sous vide jusqu'à obtention de l'indice d'acide voulu. Le polyester contenant des groupes carboxyle terminaux obtenu présente alors un indice d'acide de 100 mg de KOH/g.

2e stade.

On refroidit le mélange réactionnel obtenu au premier stade à 200 °C et l'on y ajoute 53,2 parties de 4,4′-diaminodicyclohexylméthane et 1 partie de phosphite de triphényle. Après une heure de chauffage à 200°C, lorsque le polyesteramide est tout à fait clair, on ajoute encore 1 partie de phosphite de triphényle et on abaisse la pression progressivement en une heure à 50 mm Hg. On laisse la réaction se poursuivre sous vide jusqu'à obtention de l'indice d'acide voulu. Le polyesteramide final présente alors un indice d'acide de 70 mg de KOH/g. La viscosité déterminée au viscosimètre à cône et plaque (viscosité ICI), à 200°C, est d'environ 3.000 mPa.s, le poids moléculaire moyen $\overline{M}_n$ est de 2.300 et la température de transition vitreuse (Tg) est de 54 (déterminée par calorimétrie à balayage différentiel ou DSC). La coloration du produit selon la norme ASTM D2849 est au maximum de 2 (exprimée en Gardner). On ajoute encore au produit obtenu, 5 parties de triphénylphosphine comme catalyseur de réticulation.

(2), (3) et (4).

Le mode opératoire est identique à celui décrit à l'exemple 1. Le tableau I ci-dessous indique la nature et les quantités des matières de départ utilisées, les quantités de catalyseur d'estérification (oxyde de dibutylétain), de même que l'indice d'acide (IAc) du polyester contenant des groupes carboxyle terminaux obtenu au premier stade ainsi que l'indice d'acide (IAc), la viscosité ICI à 200°C, le poids moléculaire moyen Mn et la température de transition vitreuse (Tg déterminée par DSC) du polyesteramide final obtenu au deuxième stade. La coloration selon la norme ASTM D2849 des polyesteramides obtenus est au maximum de 2 (exprimée en Gardner).
On a également préparé un polyester contenant des groupes carboxyle terminaux, numéroté C1, qui n'est pas conforme à l'invention et qui est introduit à titre comparatif. Pour la préparation du polyester C1 on procède en un stade selon le procédé décrit au premier stade de l'exemple 1.

TABLEAU I

| Ex. | Stade | Polyol(s) (parties) | Acide (parties) | Catalyseur (parties) | Diamine (parties) | IAc du polyester (mg KOH/g) | IAc du polyesteramide (mg KOH/g) | Viscosité ICI à 200°C (mPa.s) | $\overline{Mn}$ | Tg (°C) |
|---|---|---|---|---|---|---|---|---|---|---|
| 2 | 1 | NPG(331) TMP(42) | CHDA(734) | 2,7 | | 70 | | | | |
| | 2 | | | | DMPDA(18) | | 49 | 6.000 | 3.500 | 60 |
| 3 | 1 | NPG(352) dTMP(25,5) | CHDA(705) | 2,7 | | 60 | | | | |
| | 2 | | | | DADCHM(54) | | 29,5 | 3.800 | 3.500 | 56 |
| 4 | 1 | BPA(285,1) NPG(142,5) TMP(27,6) | CHDA(608,6) | 1,5 | | 78 | | | | |
| | 2 | | | 0,8 | DADCHM(47,5) | | 50 | 8.500 | 3.300 | 58 |
| C1 | 1 | BPA(335,4) NPG(145,1) TMP(24,3) | CHDA(603,5) | 1,9 | | 50 | | 7.000 | 3.100 | 55 |

Exemples 5 à 18 : Synthèse de polyesteramides en trois stades.

(5) 1er stade

Dans un réacteur conventionnel tel que décrit plus haut à l'exemple 1, on introduit 308 parties de néopentylglycol et 45 parties de triméthylolpropane. On chauffe à 130°C jusqu'à ce que les produits soient fondus et on introduit ensuite 423 parties d'acide téréphtalique et 0,8 partie d'oxyde de dibutylétain comme catalyseur d'estérification. Puis, on élève progressivement la température du mélange réactionnel à 220°C. Lorsque 95% de l'eau d'estérification a distillé et que le polyester est clair, on établit graduellement en une heure le vide jusqu'à atteindre 50 mm Hg. On poursuit la réaction sous vide en obtenant ainsi un polyester contenant des groupes hydroxyle terminaux, dont l'indice d'hydroxyle est de 150 mg de KOH/g.

2e stade.

On refroidit le mélange réactionnel obtenu au stade précédent à 200°C et on y ajoute 291,5 parties d'acide 1,4-cyclohexanedicarboxylique et 2,4 parties d'oxyde de dibutylétain comme catalyseur. On laisse la réaction se poursuivre pendant environ une heure jusqu'à clarification du mélange réactionnel. On établit graduellement le vide en 30 minutes environ jusqu'à 50 mm Hg et on maintient cette pression jusqu'à ce que l'indice d'acide voulu du polyester contenant des groupes carboxyle terminaux soit atteint. Ce polyester présente alors un indice d'acide de 100 mg de KOH/g.

3e stade.

Au mélange réactionnel maintenu à 200°C, on ajoute 53 parties de 4,4′-diaminodicyclohexylméthane. Après une heure de chauffage à 200°C, lorsque le polyesteramide est clair, on établit graduellement le vide en 30 minutes environ jusqu'à 50 mm Hg. On poursuit la réaction sous vide (50 mm Hg) pendant une heure. A ce moment, le polyesteramide contenant des groupes carboxyle terminaux obtenu possède un indice d'acide de 70 mg de KOH/g. La viscosité déterminée au viscosimètre à cône et plaque (viscosité ICI), à 200°C, est de 2.700 mPa.s, le poids moléculaire moyen $\overline{M}$ n est de 2.500 et la température de transition vitreuse (Tg) est de 55 (DSC). La coloration du produit selon la norme ASTM D2849 est au maximum de 2 (Gardner). On ajoute encore au produit obtenu, 5 parties de triphénylphosphine comme catalyseur de réticulation.

(6 à 18).

Le mode opératoire est le même que celui décrit à l'exemple 5, excepté à l'exemple 13. Dans l'exemple 13, on opère de la manière suivante au deuxième et au troisième stade.

Au deuxième stade, on condense le polyester obtenu au premier stade pendant 4 heures à 225°C avec 155,5 parties d'acide isophtalique et 1,2 partie d'oxyde de dibutylétain comme catalyseur. Puis, on établit graduellement le vide en 3 heures jusqu'à 50 mm Hg et on maintient cette pression pendant 1 heure jusqu'à ce que l'indice d'acide voulu du polyester soit atteint. Ce polyester présente alors un indice d'acide de 50 mg de KOH/g.

Au troisième stade, on refroidit le mélange réactionnel à 200°C et on y ajoute 43 parties de 4,4′-diaminodicyclohexylméthane. Après deux heures de chauffage à 200°C, on établit graduellement le vide en 60 minutes environ jusqu'à 50 mm Hg. On poursuit la réaction sous vide (50 mm Hg) pendant 30 minutes, puis pendant 2 heures sous la pression normale et finalement on établit à nouveau graduellement le vide en 60 minutes jusqu'à 50 mm Hg et on maintient cette pression jusqu'à obtention de l'indice d'acide voulu (34 mg de KOH/g).

La coloration selon la norme ASTM D2849 des polyesteramides obtenus est au maximum de 2 (Gardner).

On a préparé également 4 polyesters à groupes carboxyle terminaux, numérotés C2 à C5, qui ne sont pas conformes à l'invention et qui sont introduits à titre comparatif. Pour leur préparation, on procède en deux stades. Au premier stade, on procède comme au premier stade de l'exemple 5. Au deuxième stade, pour la préparation du polyester C2, on introduit 120 parties d'anhydride trimellitique à 180°C. Après estérification sous la pression normale à cette température et sans élimination d'eau, on obtient un polyester dont l'indice d'acide est de 70 mg de KOH/g. Pour la préparation des polyesters C3 à C5, on opère au deuxième stade de la-manière décrite ci-dessus pour le produit de l'exemple 13.

Le tableau II fournit pour chaque stade de synthèse des polyesteramides et des polyesters C2 à C5, la nature et les quantités des matières de départ, les quantités du catalyseur d'estérification (oxyde de dibutylétain), de même que l'indice d'hydroxyle (IOH) du polyester contenant des groupes hydroxyle terminaux obtenu au premier stade, l'indice d'acide (IAc) du polyester contenant des groupes carboxyle terminaux obtenu au deuxième stade, l'indice d'acide (IAc), la viscosité ICI à 200°C, le poids moléculaire moyen $\overline{M}$ n et la température de transition vitreuse (Tg déterminée par DSC) du polyesteramide final obtenu au troisième stade. La coloration selon la norme ASTM D2849 des produits obtenus est au maximum de 2 (Gardner).

EP 0 493 355 B1

TABLEAU II

Polyester

| Ex. | Stade | Polyol(s) (parties) | Acide(s) (parties) | Catalyseur (parties) | Diamine (parties) | IOH (mg KOH/g) | IAc (mg KOH/g) | IAc du poly-esteramide (mg KOH/g) | Viscosité ICI à 200°C (mPa.s) | $\overline{M}n$ | Tg (°C) |
|---|---|---|---|---|---|---|---|---|---|---|---|
| 6 | 1 | NPG(346) PE(18) | ATP(476) | 2,1 | | 110 | | | | | |
| | 2 | | AnHHP(229) | | | | 90 | | | | |
| | 3 | | | | DADCHM(40) | | | 70 | 2.000 | 2.400 | 54 |
| 7 | 1 | NPG(376) | ATP(366) 1,2,4BTA(72) | 0,8 | | 140 | | | | | |
| | 2 | | AdA(127) AnHHP(134) | 0,8 | | | 100 | | | | |
| | 3 | | | | DADCHM(53) | | | 68 | 2.000 | 2.300 | 57 |
| 8 | 1 | NPG(327) dTMP(59) | ATP(473) | 0,9 | | 115 | | | | | |
| | 2 | | AdA(225) | 0,9 | | | 90 | | | | |
| | 3 | | | | DMDACHM(41) | | | 71 | 3.200 | 2.500 | 56 |
| 9 | 1 | NPG(306,5) TMP(60) | ATP(470) | 1,0 | | 120 | | | | | |
| | 2 | | CHDA(133,5) AdA(113) | 1,0 | | | 90 | | | | |
| | 3 | | | | DMDACHM(41) | | | 70 | 5.000 | 2.700 | 60 |

TABLEAU II (suite)

Polyester

| Ex. | Stade | Polyol(s) (parties) | Acide(s) (parties) | Catalyseur (parties) | Diamine (parties) | IOH (mg KOH/g) | IAc (mg KOH/g) | IAc du poly-esteramide (mg KOH/g) | Viscosité ICI à 200°C (mPa.s) | $\bar{M}n$ | Tg (°C) |
|---|---|---|---|---|---|---|---|---|---|---|---|
| 10 | 1 | NPG(376,5) | ATP(407,5) 1,3,5BTA(61) | 0,8 | 110 | | | | | | |
| | 2 | | AdA(215) | 0,8(1) | | 90 | | | | | |
| | 3 | | | 0,4(2) | DADCHM(70) | | | 53 | 4.800 | 3.300 | 59 |
| 11 | 1 | NPG(377,5) dTMP(26) | ATP(550) | 1,0 | | 70 | | | | | |
| | 2 | | AdA(138) | 1,0 | | | 50 | | | | |
| | 3 | | | | DMDACHM(41) | | | 30 | 7.000 | 5.500 | 62 |
| 12 | 1 | NPG(368) PE(17) | ATP(524) | 0,9 | | 90 | | | | | |
| | 2 | | AdA(46) CHDA(161) | 0,9 | | | 70 | | | | |
| | 3 | | | | DACH(20) | | | 52 | 3.800 | 3.600 | 56 |
| 13 | 1 | NPG(395) | ATP(514,3) AdA(27) | 1,2 | | 70 | | | | | |
| | 2 | | AIP(155,5) | 1,2 | | | 50 | | | | |
| | 3 | | | | DADCHM(43) | | | 34 | 4.400 | 3.200 | 58 |

TABLEAU II (suite)

Polyester

| Ex. | Stade | Polyol(s) (parties) | Acide(s) (parties) | Catalyseur (parties) | Diamine (parties) | IOH (mg KOH/g) | IAc (mg KOH/g) | IAc du poly-esteramide (mg KOH/g) | Viscosité ICI à 200°C (mPa.s) | M̄n | Tg (°C) |
|---|---|---|---|---|---|---|---|---|---|---|---|
| 14 | 1 | NPG(411) TMP(14) | ATP(615) | 1,0 | | 50 | | | | | |
| | 2 | | AdA(98) | 1,0(1) | | | 30 | | | | |
| | 3 | | | 0,45(2) | HMDA(10) | | | 22 | 5.800 | 7.600 | 63 |
| 15 | 1 | NPG(319,5) HPN(137) | ATP(497) 1,2,4BTA(39) | 1,0 | | 60 | | | | | |
| | 2 | | CHDA(107) AdA(23) | 1,0(3) | | | 35 | | | | |
| | 3 | | | 1,0(2) | DMPDA(13,5) | | | 19 | 4.200 | 10.000 | 65 |
| 16 | 1 | NPG(359,3) TMP(24,4) | ATP(71,3) AIP(235,3) | 1,0 | | 312 | | | | | |
| | 2 | | CHDA(406,4) | | | | 56 | | | | |
| | 3 | | | 1,0 | DADCHM(39,9) | | | 33 | 7.200 | 4.900 | 60 |

EP 0 493 355 B1

14

EP 0 493 355 B1

TABLEAU II (suite)

Polyester

| Ex. | Stade | Polyol(s) (parties) | Acide(s) (parties) | Catalyseur (parties) | Diamine (parties) | IOH (mg KOH/g) | IAc (mg KOH/g) | IAc du poly-esteramide (mg KOH/g) | Viscosité ICI à 200°C (mPa.s) | $\overline{M}n$ | Tg (°C) |
|---|---|---|---|---|---|---|---|---|---|---|---|
| 17 | 1 | NPG(382,5) TMP(22,2) | ATP(71,7) AIP(501,5) | 1,0 | | 62 | | | | | |
| | 2 | | CHDA(143,3) | | | | 48 | | | | |
| | 3 | | | 1,0 | DADCHM(20,1) | | | 30 | 8.100 | 5.200 | 62 |
| 18 | 1 | NPG(340,8) TMP(37,0) | AIP(459,2) | 0,8 | | 140 | | | | | |
| | 2 | | AIP(152,6) CHDA(108,0) | 0,8 | | | 73 | | | | |
| | 3 | | | 0,5 | DADCHM(37,9) | | | 50 | 6.300 | 3.300 | 56 |
| C2 | 1 | NPG(384) EG(20) | ATP(547) AdA(61) | 1,0 (3) | | 40 | | | | | |
| | 2 | | AnTM(120) | | | | 70 | | 8.500 | 3.200 | 60 |
| C3 | 1 | NPG(309) EG(54,5) TMP(33) | ATP(531) AdA(59) | 1,0 (3) | | 80 | | | | | |
| | 2 | | AIP(163) | | | | 50 | | 4.500 | 3.900 | 58 |

TABLEAU II (suite)

| Ex. | Stade | Polyol(s) (parties) | Acide(s) (parties) | Catalyseur (parties) | Diamine (parties) | Polyester | | IAc du polyesteramide (mg KOH/g) | Viscosité ICI à 200°C (mPa.s) | $\bar{M}n$ | Tg (°C) |
|---|---|---|---|---|---|---|---|---|---|---|---|
| | | | | | | IOH (mg KOH/g) | IAc (mg KOH/g) | | | | |
| C4 | 1 | NPG(388,5) EG(20,5) TMP(13) | ATP(584) AdA(65) | 1,0 (3) | | 30 | | | | | |
| | 2 | | AIP(78) | | | | 30 | | 6.000 | 5.500 | 57 |
| C5 | 1 | NPG(422) | ATP(573) AdA(30) | 2,6(3) | | 50 | | | | | |
| | 2 | | AIP(118) | | | | 30 | | 3.500 | 3.200 | 50 |

(1) plus 0,4 partie de phosphite de triphényle (antioxydant).
(2) phosphite de triphényle.
(3) plus 1,0 partie de phosphite de triphényle.

Comme catalyseur de réticulation, on ajoute généralement aux produits obtenus 5 parties de triphénylphosphine.

Exemples 19 à 25. Synthèse de polyesteramides en quatre stades.

(19) 1er stade

Dans un réacteur conventionnel, tel que décrit plus haut à l'exemple 1, on introduit 293 parties de néopentylglycol et 73 parties de triméthylolpropane. On chauffe à 130°C jusqu'à ce que les produits soient fondus et on introduit ensuite 445 parties d'acide téréphtalique et 1,0 partie d'oxyde de dibutylétain comme catalyseur d'estérification. Puis, on porte la température du mélange réactionnel à 225°C. Lorsque 95% de l'eau d'estérification a distillé et que le polyester est clair, on établit graduellement le vide en une heure jusqu'à atteindre 50 mm Hg et on laisse la réaction se poursuivre sous vide en obtenant ainsi un polyester à groupes hydroxyle terminaux, dont l'indice d'hydroxyle est de 150 mg de KOH/g.

2e stade

On refroidit le mélange réactionnel obtenu au premier stade à 200°C, et on y ajoute 159 parties d'acide isophtalique et 1,0 partie d'oxyde de dibutylétain comme catalyseur d'estérification. Puis, on porte le mélange réactionnel à 225°C et on maintient cette température jusqu'à ce que le polyester soit tout à fait clair. Le polyester contient des groupes hydroxyle et carboxyle terminaux; la différence ( Δ I) entre l'indice d'hydroxyle et l'indice d'acide de ce polyester est égale à -0,3 mg de KOH/g.

3e stade.

On refroidit le mélange réactionnel obtenu au deuxième stade à 200°C, et on y ajoute 1,0 partie d'oxyde de dibutylétain et 140 parties d'acide adipique, soit une quantité équimolaire par rapport à la quantité d'acide isophtalique utilisée au deuxième stade. Puis, on porte la température du mélange réactionnel à 225°C. Lorsque le mélange réactionnel est tout à fait clair, la pression est abaissée progressivement en une heure à 50 mm Hg. On poursuit l'opération sous vide en obtenant ainsi un polyester contenant des groupes carboxyle terminaux dont l'indice d'acide est de 110 mg de KOH/g.

4e stade.

On refroidit le mélange réactionnel à 200°C et on y ajoute 36 parties de 4,4′-diaminodicyclohexylméthane et 20 parties de 1,6-hexanediamine. On porte le mélange réactionnel à 225°C. Après une heure de chauffage à 225°C, lorsque le polyesteramide est tout à fait clair, on établit graduellement le vide en une heure de la pression normale jusqu'à 50 mm Hg. On poursuit l'opération sous vide jusqu'à obtention d'un indice d'acide de 72 mg de KOH/g. La viscosité déterminée au viscosimètre à cône et plaque (viscosité ICI), à 200°C, est de 4.200 mPa.s, le poids moléculaire moyen $\overline{M}$ n est de 2.600 et la température de transition vitreuse (Tg) est de 57 (DSC). La coloration du produit selon la norme ASTM D2849 est au maximum de 2 (Gardner). On ajoute encore au produit obtenu 5 parties de triphénylphosphine comme catalyseur de réticulation.

(20 à 25).

Adoptant le mode opératoire décrit à l'exemple 19, on a préparé une série de polyesteramides qui sont conformes à l'invention, plus un polyester contenant des groupes carboxyle terminaux, numéroté C6, qui est introduit à titre comparatif. Pour la préparation de ce dernier produit on procède comme aux trois premiers stades de l'exemple 19 (donc sans diamine).

Le tableau III fournit pour chaque stade de synthèse des polyesteramides et du polyester C6, la nature et les quantités des matières de départ, les quantités du catalyseur d'estérification (oxyde de dibutylétain) et le rapport molaire entre l'acide dicarboxylique aliphatique utilisé au troisième stade et l'acide isophtalique utilisé au deuxième stade, de même que l'indice d'hydroxyle (IOH) du polyester contenant des groupes hydroxyle terminaux obtenu au premier stade, la différence (ΔI) entre l'indice d'hydroxyle et l'indice d'acide du polyester contenant des groupes hydroxyle et carboxyle terminaux obtenu au deuxième stade, l'indice d'acide (IAc) du polyester contenant des groupes carboxyle terminaux obtenu au troisième stade et l'indice d'acide (IAc), la viscosité ICI à 200°C, le poids moléculaire moyen $\overline{M}$ n et la température de transition vitreuse (Tg déterminée par DSC) du polyesteramide final obtenu au quatrième stade. La coloration selon la norme ASTM D2849 des produits obtenus est au maximum de 2 (Gardner).

EP 0 493 355 B1

TABLEAU III

| Ex. | Stade | Polyol(s) (parties) | Acide(s) (parties) | Catalyseur (partie) | Diamine (parties) | Rapport molaire AdA/IAP ou CHDA/AIP (1) | IOH (2) | $\Delta$ I (3) | IAc (4) | IAc (5) | Viscosité ICI (mPa.s) | $\overline{M}n$ | Tg (°C) |
|---|---|---|---|---|---|---|---|---|---|---|---|---|---|
| 20 | 1 | NPG(360,5) TMP(35) | AIP(532) | 0,9 | | | 90 | | | | | | |
| | 2 | | AIP(63) | 0,9 | | | | 36 | | | | | |
| | 3 | | AdA(129) | | | 70/30 | | | 70 | | | | |
| | 4 | | | | DADCHM(36) | | | | | 51 | 3.000 | 3.300 | 55 |
| 21 | 1 | NPG(379,5) TMP(23,5) | ATP(562) | 1,2 | | | 70 | | | | | | |
| | 2 | | AIP(80) | | | | | 6 | | | | | |
| | 3 | | AdA(70) | 1,2 | | 50/50 | | | 50 | | | | |
| | 4 | | | | HMDA(20) | | | | | 29 | 6.300 | 5.600 | 60 |
| 22 | 1 | NPG(386) | ATP(433,5) 1,2,4BTA(58) | 0,9 | | | 100 | | | | | | |
| | 2 | | AIP(138) | | | | | -18 | | | | | |
| | 3 | | CHDA(95) | 0,9 | | 60/40 | | | 80 | | | | |
| | 4 | | | | DMPDA(27) | | | | | 49 | 5.500 | 3.400 | 59 |
| 23 | 1 | NPG(406) | ATP(529) | 0,9 | | | 98 | | | | | | |
| | 2 | | AIP(153) | | | | | -29 | | | | | |
| | 3 | | AdA(34) | 0,9 | | 16,5/83,5 | | | 50 | | | | |
| | 4 | | | | HMDA(20) | | | | | 33,5 | 5.900 | 3.700 | 65 |

18

EP 0 493 355 B1

Comme catalyseur de réticulation, on ajoute généralement aux produits obtenus 5 parties de triphénylphosphine.

<u>TABLEAU III</u> (suite)

| Ex. | Stade | Polyol(s) (parties) | Acide(s) (parties) | Catalyseur (partie) | Diamine (parties) | Rapport molaire AdA/IAP ou CHDA/AIP (1) | IOH (2) | ΔI (3) | IAc (4) | IAc (5) | Viscosité ICI (mPa.s) | M̄n | Tg (°C) |
|---|---|---|---|---|---|---|---|---|---|---|---|---|---|
| 24 | 1 | NPG(411) | ATP(545) | 1,0 | | | 90 | | | | | | |
| | 2 | | AIP(136) | 1,0 | | | | -17 | | | | | |
| | 3 | | AdA(30) | 0,5(6) | | 20/80 | | | 40 | | | | |
| | 4 | | | | DADCHM(18) | | | | | 31 | 3.600 | 3.600 | 61 |
| 25 | 1 | NPG(408) TMP(5) | ATP(595,5) | 1,3 | | | 50 | | | | | | |
| | 2 | | AIP(46) | 1,3 | | | | 14 | | | | | |
| | 3 | | AdA(62) | 0,5(6) | | 60/40 | | | 35 | | | | |
| | 4 | | | 0,5(6) | DADCHM(27,5) | | | | | 20 | 7.300 | 6.100 | 59 |
| C6 | 1 | NPG(340) TMP(58) | ATP(518) | 2,3 | | | 110 | | | | | | |
| | 2 | | AIP(141) | | | | | -7 | | | | | |
| | 3 | | AdA(82,5) | | | | | | 70 | | 3.900 | 3.300 | 53 |

(1) Rapport molaire entre l'acide dicarboxylique (cyclo)aliphatique utilisé au 3e stade et l'acide isophtalique utilisé au 2e stade.
(2) Indice d'hydroxyle (en mg de KOH/g) du polyester contenant des groupes hydroxyle terminaux.
(3) Différence (en mg de KOH/g) entre l'indice d'hydroxyle et l'indice d'acide du polyester contenant des groupes hydroxyle et carboxyle terminaux.
(4) Indice d'acide (en mg de KOH/g) du polyester contenant des groupes carboxyle terminaux.
(5) Indice d'acide (en mg de KOH/g) du polyesteramide contenant des groupes carboxyle terminaux.
(6) Phosphite de triphényle (antioxydant).

19

Exemple 26. Préparation de compositions thermodurcissables en poudre.

A partir des polyesteramides conformes à l'invention obtenus dans les exemples 1 à 25 et des polyesters C1 à C6 non conformes à l'invention, on prépare une série de poudres pigmentées utilisables pour la fabrication de revêtements par projection à l'aide d'un pistolet pulvérisateur électrostatique, dont la formulation est la suivante :

a) Formulations 50/50 à base des polyesteramides des exemples 1, 5 à 9 et 19 et des polyesters C2 et C6 (indice d'acide = 70 mg de KOH/g).

| | |
|---|---|
| Polyesteramide ou polyester : | 300 parties |
| Résine époxy (1) : | 300 parties |
| Dioxyde de titane (2) : | 400 parties |
| Agent régulateur de fluidité (3) : | 10 parties |
| Benzoïne : | 3,5 parties |

b) Formulations 60/40 à base des polyesteramides des exemples 2, 10 et 20. (indice d'acide = 50 mg de KOH/g).

| | |
|---|---|
| Polyesteramide : | 360 parties |
| Résine époxy (1) : | 240 parties |
| Dioxyde de titane (2) : | 400 parties |
| Agent régulateur de fluidité (3) : | 10 parties |
| Benzoïne : | 3,5 parties |

c) Formulations 70/30 à base des polyesteramides des exemples 11 et 21 et du polyester C4 (indice d'acide = 30 mg de KOH/g).

| | |
|---|---|
| Polyesteramide ou polyester : | 420 parties |
| Résine époxy (1) : | 180 parties |
| Dioxyde de titane (2) : | 400 parties |
| Agent régulateur de fluidité (3) : | 10 parties |
| Benzoïne : | 3,5 parties |

d) Formulations 90/10 à base des polyesteramides des exemples 4, 12, 18 et 22 et des polyesters C1 et C3 (indice d'acide = 50 mg de KOH/g).

```
Polyesteramide ou polyester        : 540  parties
Isocyanurate de glycidyle (4)      :  60  parties



Dioxyde de titane (2)              : 400  parties
Agent régulateur de fluidité (3)   :  10  parties
Benzoïne                           :   3,5 parties
```

e) Formulations 93/7 des polyesteramides des exemples 3, 13, 16, 17, 23 et 24 et du polyester C5 (indice d'acide = 30 mg de KOH/g).

| | |
|---|---|
| Polyesteramide ou polyester : | 558 parties |
| Isocyanurate de glycidyle (4) : | 42 parties |
| Dioxyde de titane (2) : | 400 parties |
| Agent régulateur de fluidité (3) : | 10 parties |
| Benzoïne : | 3,5 parties |

f) Formulations 96/4 des polyesteramides des exemples 14, 15 et 25 (indice d'acide = 20 mg de KOH/g).

| Polyesteramide : | 576 parties |
|---|---|
| Isocyanurate de glycidyle (4) : | 24 parties |
| Dioxyde de titane (2) : | 400 parties |
| Agent régulateur de fluidité (3) : | 10 parties |
| Benzoïne : | 3,5 parties |

(1) Araldite GT7004 (Ciba Geigy)
(2) Kronos CL310 (Ciba Geigy)
(3) Résiflow PV5 (Worlée Chemie)
(4) Araldite PT810 (Ciba Geigy)

On prépare ces poudres par mélange et homogénéisation des divers ingrédients à une température d'environ 100 °C dans une extrudeuse Buss-Ko-Kneter PR 46 ou Baker Perkins MP 2030, suivie d'un refroidissement, broyage et tamisage de l'extrudat. Les poudres ainsi obtenues ont une dimension de particule comprise entre 25 et 100 micromètres.

Exemple 27. Caractéristiques de chargement tribo-électrique des compositions.

A) Dans une première expérience, on détermine la valeur de la charge électrique acquise par la poudre lors de son passage à travers un pistolet pulvérisateur tribo-électrique, dont les tubes de charge sont en un matériau à base de polytétrafluoroéthylène, en mesurant l'intensité du courant électrique produit entre le pistolet et la terre pour des pressions d'air croissantes exercées sur le pistolet (0,5 à 3,5 kg/cm$^2$) et pour différentes pressions d'air sur la pompe venturi du lit fluidisé (1 kg/cm$^2$ et 3 kg/cm$^2$). Dans cet essai, on a comparé la valeur de la charge électrique obtenue avec la poudre formulée à partir du polyesteramide préparé à l'exemple 9 (conforme à l'invention) à celle obtenue avec la poudre formulée à partir du polyester C6 (non conforme à l'invention); ces deux poudres pigmentées sont préparées comme décrit à l'exemple 26 en utilisant la formulation 50/50 indiquée au paragraphe a).

Les résultats obtenus sont reportés dans les tableaux IVa et IVb, dans lesquels les valeurs indiquées représentent les intensités du courant, exprimées en microampères ($\mu$A), en fonction de la pression d'air exercée sur le pistolet. Le tableau IVa donne les résultats pour une pression d'air de 1 kg/cm$^2$ sur la pompe venturi du lit fluidisé et le tableau IVb pour une pression d'air de 3 kg/cm$^2$.

TABLEAU IVa

| (pression sur le venturi de 1 kg/cm$^2$). | | |
|---|---|---|
| Pression sur pistolet (en kg/cm$^2$) | Intensité du courant (en $\mu$A) | |
| | Formulation à base du polyesteramide de l'exemple 9 | Polyester C6 |
| 0,5 | 0,8 | 0 |
| 1,0 | 1,0 | 0 |
| 1,5 | 1,4 | 0 |
| 2,0 | 1,9 | 0 |
| 2,5 | 2,4 | 0 |
| 3,0 | 2,8 | 0 |
| 3,5 | 3,1 | 0 |

### TABLEAU IVb (pression sur le venturi de 3 kg/cm$^2$).

| Pression sur pistolet (en kg/cm$^2$) | Intensité du courant (en µA) | |
|---|---|---|
| | Formulation à base du polyesteramide de l'exemple 9 | Polyester C6 |
| 0,5 | 1,3 | 0,0 |
| 1,0 | 2,7 | 0,8 |
| 1,5 | 4,2 | 1,5 |
| 2,0 | 5,5 | 1,4 |
| 2,5 | 6,5 | 1,6 |

### TABLEAU IVb (pression sur le venturi de 3 kg/cm$^2$) (suite)

| Pression sur pistolet (en kg/cm$^2$) | Intensité du courant (en µA) | |
|---|---|---|
| | Formulation à base du polyesteramide de l'exemple 9 | Polyester C6 |
| 3,0 | 7,3 | 1,5 |
| 3,5 | 8,0 | 1,3 |

On voit que l'incorporation de fonctions amides dans la chaîne du polymère permet d'augmenter considérablement la charge électrostatique de la poudre. En effet, l'intensité du courant atteint et dépasse sensiblement 2 microampères dans le cas de la poudre à base du polyesteramide de l'exemple 9 conforme à l'invention, alors que la poudre à base du polyester C6 non conforme à l'invention n'acquièrt pas de charge du tout ou seulement une charge insuffisante, l'intensité du courant n'atteignant que 1,6 microampère dans le cas le plus favorable.

En conclusion, seules les compositions en poudre préparées à partir des polyesteramides conformes à l'invention peuvent convenir pour l'obtention de revêtements par projection avec un pistolet pulvérisateur tribo-électrique.

B) Dans une autre expérience, on détermine la valeur quantitative de la charge électrique acquise par la poudre lors de son passage à travers un pistolet tribo-électrique de construction similaire à celle utilisée pour la première expérience, en mesurant l'intensité du courant électrique produit entre le pistolet et la terre ($I_{TA}$) d'une part, et l'intensité du courant produit entre l'objet en aluminium (3003 H14) d'une épaisseur de 0,625 mm et la terre ($I_{VA}$), d'autre part, pour une pression d'air constante de 3 kg/cm$^2$ sur le pistolet et de 2 kg/cm$^2$ sur le venturi.

Les résultats obtenus avec les poudres formulées à partir des polyesteramides préparés dans les exemples 1 à 25 sont reportés dans le tableau V, en y incluant également, à titre comparatif, les poudres formulées à partir des polyesters C1 à C5 quine sont pas conformes à l'invention. Ces derniers produits ont été ajoutés à titre de référence pour mieux illustrer les avantages spécifiques de la présente invention. La formulation des poudres a été effectuée comme décrite à l'exemple 26. Les valeurs indiquées dans le tableau V représentent les intensités du courant, exprimées en microampères (µA).

## TABLEAU V

| Formulation à base du polyesteramide de l'exemple | Intensité du courant (en μA) | |
| :---: | :---: | :---: |
| | $I_{TA}$ | $I_{VA}$ |
| 1 | 4,0 | -2,5 |
| 2 | 3,7 | -2,5 |
| 3 | 3,8 | -2,6 |
| 4 | 4,0 | -3,4 |
| 5 | 3,5 | -2,2 |
| 6 | 4,2 | -2,4 |
| 7 | 3,4 | -2,5 |
| 8 | 3,5 | -2,6 |
| 9 | 3,8 | -2,9 |
| 10 | 3,5 | -2,5 |
| 11 | 3,8 | -3,5 |
| 12 | 3,8 | -2,7 |
| 13 | 3,5 | -2,9 |
| 14 | 3,7 | -2,7 |
| 15 | 3,6 | -2,5 |
| 16 | 4,1 | -2,8 |
| 17 | 3,8 | -2,9 |
| 18 | 4,0 | -3,2 |
| 19 | 4,0 | -2,6 |
| 20 | 4,3 | -2,2 |
| 21 | 3,8 | -3,5 |
| 22 | 4,0 | -2,5 |
| 23 | 3,7 | -2,8 |
| 24 | 3,5 | -2,7 |
| 25 | 3,2 | -2,7 |
| **Polyester (1)** | | |
| C1 | 1,0 | -0,6 |
| C2 | 0,7 | -0,4 |
| C3 | 1,2 | -0,5 |
| C4 | 1,8 | -1,4 |
| C5 | 1,7 | -1,0 |

(1) à titre de comparaison.

Les résultats obtenus montrent que les poudres conformes à l'invention acquièrent une bonne charge dans un pistolet pulvérisateur tribo-électrique; l'intensité du courant dépasse sensiblement 2 microampères. Par contre, les poudres contenant des polyesters à groupes carboxyle, non conformes à l'invention, acquièrent une charge insuffisante pour permettre une application par le procédé tribo-électrique.

C) Essai de recyclage.

Dans cet essai, on détermine la valeur de la charge électrique acquise par la poudre de la même manière et dans les mêmes conditions de pression qu'à l'expérience B) ci-dessus, mais on fait également des mesures sur la poudre récupérée après une première application sur l'objet à recouvrir. Les résultats obtenus avec la poudre formulée à partir du polyesteramide préparé à l'exemple 9 sont reproduits au tableau VI, dans lequel on indique également le diamètre moyen des particules de poudre lors de la première application et à chaque récupération.

TABLEAU VI

|  | Diamètre moyen des particules (en µm) | Intensité du courant (en µA) | |
| --- | --- | --- | --- |
|  |  | $I_{TA}$ | $I_{VA}$ |
| 1ère application | 52,20 | 5,1 | -4,3 |
| 1ère récupération | 49,05 | 5,0 | -4,4 |
| 2e récupération | 34,81 | 5,2 | -4,3 |
| 3e récupération | 33,68 | 4,9 | -4,3 |

On voit que malgré la diminution du diamètre des particules, les propriétés de chargement tribo-électrique restent excellentes après plusieurs récupérations.

Exemple 28. Caractéristiques des enduits de peinture.

On applique les poudres pigmentées formulées comme décrit à l'exemple 26 avec les polyesteramides conformes à l'invention préparés dans les exemples 1 à 25 sur une plaque en acier dégraissé d'une épaisseur de 0,5 mm au moyen d'un pistolet tribo-électrique.

Parallèlement, à titre comparatif, les poudres formulées comme décrit à l'exemple 26 avec les polyesters $C_1$ à $C_5$ non conformes à l'invention sont appliquées sur le même substrat à l'aide d'un pistolet pulvérisateur traditionnel dans un champ électrostatique sous une tension de 40 kV. L'épaisseur des dépôts ainsi obtenus est de 65 micromètres. Ensuite, on détermine pour chaque poudre la température minimale de cuisson permettant le durcissement du revêtement en 10 minutes et on soumet les revêtements obtenus après cuisson aux tests classiques. Les résultats obtenus sont reproduits au tableau VII dans lequel

la 1ère colonne donne la formulation testée,
la 2e colonne la température minimale de cuisson (en °C),
la 3e colonne la valeur du brillant sous un angle de 60° (en %) selon la norme ASTM D523,
la 4e colonne le comportement de l'enduit au pliage sur un mandrin conique d'un diamètre de 3 mm (ASTM D522),
la 5e colonne la valeur obtenue dans l'essai de l'emboutissage Erichsen (en mm) selon la norme ISO 1520,
la 6e colonne la valeur de la résistance au choc inverse (en kg.cm) selon la norme ASTM D2794,
la 7e colonne la valeur de la résistance au choc direct (en kg.cm) selon la norme ASTM D2794.

On a soumis les revêtements également à un essai de vieillissement accéléré afin d'en estimer la résistance aux rayons ultraviolets (test Q-UV). A cet effet, les revêtements sont placés dans une chambre Q-UV (de la Q-Panel Company) où ils subissent deux cycles de vieillissement par jour. Chaque cycle comprend une période de 8 heures d'irradiation sous quatre lampes UV (FS40) à 60°C (température du panneau noir) en atmosphère sèche, suivie d'une période de 4 heures à l'obscurité à 40°C et sous 100% d'humidité relative. Chaque jour, on mesure la brillance des films sous un angle de 60° selon la norme ASTM D523.

Dans cet essai, on compare les revêtements obtenus avec les poudres formulées à partir des polyesteramides (conformes à l'invention) préparés aux exemples 4, 22 et 24 respectivement avec ceux obtenus avec les poudres formulées à partir des polyesters C1, C3 et C5 (non conformes à l'invention).

Le polyesteramide de l'exemple 4 et le polyester C1 sont formulés en un vernis en poudre ayant la composition suivante (formulations 90/10) :

| Polyesteramide ou polyester : | 855 parties |
| --- | --- |

Suite du Tableau sur la page suivante

(suite)

| Isocyanurate de triglycidyle : | 95 parties |
|---|---|
| Agent régulateur de fluidité : | 48 parties |
| Benzoïne : | 2 parties |

Le polyesteramide de l'exemple 22 et le polyester C3 sont formulés en une peinture en poudre de couleur gris foncé ayant la composition ci-dessous (formulation 90/10) tandis que le polyesteramide de l'exemple 24 et le polyester C5 sont formulés en une peinture similaire selon une formulation 93/7 :

| | | Formulations | |
|---|---|---|---|
| | | 90/10 | 93/7 |
| Polyesteramide ou polyester | : | 597 | 616 parties |
| Isocyanurate de triglycidyle | : | 66 | 47 parties |
| Sulfate de baryum (1) | : | 165 | 165 parties |
| Oxyde de fer (2) | : | 132 | 132 parties |
| Dioxyde de titane (3) | : | 33 | 33 parties |
| Agent régulateur de fluidité | : | 4 | 4 parties |
| Benzoïne | : | 3 | 3 parties |

(1) Blanc fixe N (Sachtleben)

(2) Bayferrox 318 (Bayer)

(3) Kronos 2160 (Kronos Titan)

Les enduits déposés à partir des poudres à base des polyesteramides des exemples 4 et 22 et des polyesters C1 et C3 ont subi une cuisson de 10 minutes à 200°C et les enduits déposés à partir des poudres à base du polyesteramide de l'exemple 24 et du polyester C5 ont subi une cuisson de 10 minutes à 160°C.

Dans le tableau VIII, on donne pour les six poudres la valeur de la brillance relative (exprimée en %) en fonction du temps.

TABLEAU VII

| Formulation à base du polyesteramide de l'exemple | Température de cuisson minimale (°C) | Brillant à 60°(%) | Mandrin conique | Emboutissage Erichsen (mm) | Choc inverse 10 minutes (kg.cm) | Choc direct 10 minutes (kg.cm) |
|---|---|---|---|---|---|---|
| 1 | 180 | 90 | Passe | 9,3 | 160 | 160 |
| 2 | 180 | 90 | Passe | 9,8 | 160 | 160 |
| 3 | 200 | 86 | Passe | 9,8 | 160 | 160 |
| 4 | 200 | 90 | Passe | 10,0 | 160 | 160 |
| 5 | 180 | 85 | Passe | 10,3 | 160 | 160 |
| 6 | 180 | 87 | Passe | 9,8 | 160 | 160 |
| 7 | 180 | 92 | Passe | 9,6 | 160 | 160 |
| 8 | 180 | 88 | Passe | 10,1 | 160 | 160 |
| 9 | 180 | 93 | Passe | 9,0 | 160 | 160 |
| 10 | 180 | 87 | Passe | 10,2 | 160 | 160 |
| 11 | 180 | 91 | Passe | 9,7 | 160 | 160 |
| 12 | 200 | 88 | Passe | 9,9 | 160 | 160 |
| 13 | 160 | 93 | Passe | 10,0 | 160 | 160 |
| 14 | 200 | 88 | Passe | 9,5 | 160 | 140 |
| 15 | 200 | 93 | Passe | 9,8 | 160 | 160 |
| 16 | 200 | 91 | Passe | 9,3 | 160 | 160 |
| 17 | 200 | 93 | Passe | 9,0 | 160 | 160 |
| 18 | 200 | 89 | Passe | 9,0 | 160 | 160 |

TABLEAU VII (suite)

| Formulation à base du polyesteramide de l'exemple | Température de cuisson mini-male (°C) | Brillant à 60°(%) | Mandrin conique | Emboutissage Erichsen (mm) | Choc inverse 10 minutes (kg.cm) | Choc direct 10 minutes (kg.cm) |
|---|---|---|---|---|---|---|
| 19 | 180 | 95 | Passe | 9,4 | 160 | 160 |
| 20 | 180 | 90 | Passe | 9,0 | 160 | 160 |
| 21 | 180 | 85 | Passe | 9,5 | 160 | 160 |
| 22 | 200 | 92 | Passe | 9,8 | 160 | 160 |
| 23 | 180 | 90 | Passe | 9,6 | 160 | 160 |
| 24 | 160 | 94 | Passe | 10,5 | 160 | 160 |
| 25 | 200 | 90 | Passe | 9,3 | 140 | 140 |
| Polyester (1) | | | | | | |
| C1 | 200 | 92 | Passe | 9,5 | 160 | 160 |
| C2 | 180 | 94 | Passe | 9,7 | 160 | 160 |
| C3 | 200 | 91 | Passe | 9,7 | 160 | 160 |
| C4 | 180 | 90 | Passe | 9,3 | 160 | 160 |
| C5 | 200 | 98 | Passe | 9,9 | 160 | 160 |

(1) à titre comparatif.

## TABLEAU VIII

### Brillance relative à 60° (%)

#### Formulation à base du

| Durée (jours) | polyesteramide de l'ex. 4 | polyester C1 | polyesteramide de l'ex. 22 | polyester C3 | polyesteramide de l'ex. 24 | polyester C5 |
|---|---|---|---|---|---|---|
| 0 | 100 | 100 | 100 | 100 | 100 | 100 |
| 2 | | | 98 | 98 | 98 | 98 |
| 4 | | | 96 | 96 | 96 | 96 |
| 6 | | | 96 | 96 | 96 | 96 |
| 8 | 93 | 95 | 96 | 97 | 96 | 98 |
| 10 | | | 95 | 98 | 96 | 100 |
| 12 | | | 90 | 92 | 90 | 92 |
| 14 | 94 | 95 | 77 | 80 | 78 | 81 |
| 16 | | | 58 | 58 | 54 | 54 |
| 18 | | | 30 | 30 | 30 | 30 |
| 20 | 92 | 91 | 24 | 24 | 24 | 24 |
| 22 | | | 18 | 18 | 18 | 18 |
| 24 | | | 10 | 10 | 10 | 10 |
| 26 | | | 6 | 10 | 7 | 7 |
| 28 | 84 | 85 | 0 | 0 | 5 | 5 |
| 32 | 73 | 72 | | | | |
| 42 | 50 | 49 | | | | |
| 63 | 28 | 25 | | | | |

Ces résultats montrent clairement que les compositions en poudre à base des polyesteramides conformes à l'invention donnent des enduits de peinture et de vernis possédant des propriétés similaires à celles des enduits correspondants obtenus à partir des compositions de l'état de la technique à base de polyesters.

**Revendications**

**Revendications pour les Etats contractants suivants : AT, BE, CH, DE, DK, FR, GB, GR, IT, LI, LU, MC, NL, SE**

1. Polyesteramides contenant des groupes carboxyle terminaux comprenant les produits de réaction d'au moins une diamine et d'un polyester contenant des groupes carboxyle terminaux, ledit polyester contenant des groupes carboxyle terminaux étant choisi parmi

   (a) un polyester préparé à partir d'au moins un acide dicarboxylique aliphatique et/ou cycloaliphatique et d'au moins un polyol;
   (b) un polyester qui est le produit de réaction de

      (i) au moins un acide dicarboxylique choisi parmi les acides dicarboxyliques aliphatiques, les acides dicarboxyliques cycloaliphatiques et l'acide isophtalique, avec
      (ii) un polyester contenant des groupes hydroxyle terminaux préparé à partir d'au moins un acide polycarboxylique aromatique et/ou aliphatique et/ou cycloaliphatique et d'au moins un polyol ; et

   (c) un polyester qui est le produit de réaction de

      (i) au moins un acide dicarboxylique aliphatique et/ou cycloaliphatique avec
      (ii) un polyester contenant à la fois des groupes hydroxyle et carboxyle terminaux préparé par estérification de
      (iii) l'acide isophtalique avec
      (iv) un polyester contenant des groupes hydroxyle terminaux préparé à partir d'au moins un acide polycarboxylique aromatique et/ou aliphatique et/ou cycloaliphatique et d'au moins un polyol.

2. Polyesteramides selon la revendication 1, caractérisés en ce qu'ils présentent un indice d'acide de 10 à 100 mg de KOH/g, avantageusement de 20 à 70 mg de KOH/g et un poids moléculaire moyen en nombre compris entre 1.000 et 16.000, de préférence entre 1.500 et 8.500.

3. Polyesteramides selon la revendication 1 ou 2, caractérisés en ce que la diamine est une diamine diprimaire, disecondaire ou à la fois primaire et secondaire, de préférence une diamine diprimaire.

4. Polyesteramides selon l'une quelconque des revendications 1 à 3, caractérisés en ce que la diamine est une diamine aliphatique, cycloaliphatique ou aromatique, de préférence une diamine aliphatique ou cycloaliphatique.

5. Polyesteramides selon l'une quelconque des revendications 1 à 4, caractérisés en ce que la diamine est choisie parmi l'éthylènediamine, la 1,3-propanediamine, la 1,5-pentanediamine, la 1,6-hexanediamine, les 1,2-, 1,3- et 1,4-cyclohexanediamines, la 2,2-diméthyl-1,3-propanediamine, la N-(2-aminoéthyl)-1,2-éthanediamine, le 3,3′-diméthyl-4,4′-diaminodicyclohexylméthane, le 4,4′-diaminodicyclohexylméthane, le 3,3′-diméthyl-4,4′-diaminodiphénylméthane et le 4,4′-diaminodiphénylméthane, seuls ou en mélange.

6. Polyesteramides selon l'une quelconque des revendications 1 à 5, caractérisés en ce que le polyol est un polyol aliphatique, cycloaliphatique ou aromatique dihydroxylé à tétrahydroxylé.

7. Polyesteramides selon la revendication 6, caractérisés en ce que le polyol est choisi parmi le néopentylglycol, l'éthylèneglycol, le diéthylèneglycol, le 1,2-propanediol, le 1,3-propanediol, le 1,4-butanediol, le 1,5-pentanediol, le 1,6-hexanediol, l'hydroxypivalate de néopentylglycol, le bisphénol A, le 1,4-cyclohexanediméthanol, le 2,2-bis(4-hydroxycyclohexyl)-propane, le triméthylolpropane, le di-triméthylolpropane et le pentaérythritol, seuls ou en mélange.

8. Polyesteramides selon l'une quelconque des revendications 1 à 7, caractérisés en ce que l'acide di- ou polycarboxylique aliphatique ou cycloaliphatique est choisi parmi l'acide adipique, l'acide succinique, l'acide glutarique, l'acide sébacique, l'acide azélaïque, les acides 1,2-, 1,3- et 1,4-cyclohexanedicarboxyliques, l'acide tétrahydrophtalique, l'acide hexahydrophtalique, ainsi que parmi leurs anhydrides, seuls ou en mélange.

9. Polyesteramides selon l'une quelconque des revendications 1 à 8, caractérisés en ce que l'acide polycarboxylique aromatique est choisi parmi l'acide o-phtalique, l'acide isophtalique, l'acide téréphtalique, l'acide 1,2,4-benzènetricarboxylique et l'acide 1,3,5-benzènetricarboxylique, ainsi que parmi leurs anhydrides, seuls ou en mélange.

10. Polyesteramides selon l'une quelconque des revendications 1 à 9, caractérisés en ce que l'indice d'acide du polyester contenant des groupes carboxyle terminaux est de 20 à 200 mg de KOH/g, avantageusement de 30 à 110 mg de KOH/g.

11. Polyesteramides selon l'une quelconque des revendications 1 à 10, caractérisés en ce que l'indice d'hydroxyle du polyester contenant des groupes hydroxyle terminaux est de 30 à 400 mg de KOH/g, avantageusement de 50 à 150 mg de KOH/g.

12. Polyesteramides selon l'une quelconque des revendications 1 à 11, caractérisés en ce que la différence entre l'indice d'hydroxyle et l'indice d'acide du polyester contenant à la fois des groupes hydroxyle et carboxyle terminaux est comprise entre -100 et +100 mg de KOH/g, avantageusement entre -50 et +50 mg de KOH/g.

13. Polyesteramides selon l'une quelconque des revendications 1 à 12, caractérisés en ce que le rapport molaire entre l'acide dicarboxylique aliphatique et/ou cycloaliphatique et l'acide isophtalique dans le polyester contenant des groupes carboxyle terminaux (c) est compris dans l'intervalle de 1/99 à 99/1.

14. Polyesteramides selon l'une quelconque des revendications 1 à 13, caractérisés en ce que la quantité de diamine est comprise entre 1 et 20 parties en poids, de préférence de 1 à 10 parties en poids pour 100 parties en poids de polyesteramide contenant des groupes carboxyle terminaux.

15. Procédé de préparation de polyesteramides selon la revendication 1, caractérisé en ce que

(1) on prépare d'abord un polyester contenant des groupes carboxyle terminaux, à chaîne linéaire ou ramifiée, à partir d'au moins un acide dicarboxylique aliphatique et/ou cycloaliphatique et d'au moins un polyol dans les proportions molaires requises pour obtenir des groupes carboxyle en bout de chaîne, et
(2) on fait réagir ensuite le polyester contenant des groupes carboxyle terminaux préparé en (1) avec au moins une diamine.

16. Procédé de préparation de polyesteramides selon la revendication 1, caractérisé en ce que

(1) on prépare d'abord un polyester contenant des groupes hydroxyle terminaux, à chaîne linéaire ou ramifiée, à partir d'au moins un acide polycarboxylique aromatique et/ou aliphatique et/ou cycloaliphatique et d'au moins un polyol dans les proportions requises pour obtenir des groupes hydroxyle en bout de chaîne;
(2) on estérifie ensuite le polyester contenant des groupes hydroxyle terminaux préparé en (1) avec au moins un acide dicarboxylique choisi parmi les acides dicarboxyliques aliphatiques, les acides dicarboxyliques cycloaliphatiques et l'acide isophtalique pour obtenir un polyester contenant des groupes carboxyle terminaux, et
(3) finalement, on fait réagir le polyester contenant des groupes carboxyle terminaux préparé en (2) avec au moins une diamine.

17. Procédé de préparation de polyesteramides selon la revendication 1, caractérisé en ce que

(1) on prépare d'abord un polyester contenant des groupes hydroxyleterminaux, à chaîne linéaire ou ramifiée, à partir d'au moins un acide polycarboxylique aromatique et/ou aliphatique et/ou cycloaliphatique et d'au moins un polyol dans les proportions requises pour obtenir des groupes hydroxyle en bout de chaîne;
(2) on estérifie ensuite le polyester contenant des groupes hydroxyle terminaux préparé en (1) avec de l'acide isophtalique dans les proportions requises pour obtenir un polyester contenant à la fois des groupes hydroxyle et carboxyle terminaux;
(3) on estérifie ensuite le polyester contenant à la fois des groupes hydroxyle et carboxyle terminaux préparé en (2) avec au moins un acide dicarboxylique aliphatique et/ou cycloaliphatique pour obtenir un polyester contenant des groupes carboxyle terminaux, et
(4) finalement, on fait réagir le polyester contenant des groupes carboxyle terminaux préparé en (3) avec au moins une diamine.

**18.** Compositions thermodurcissables en poudre, caractérisées en ce qu'elles comprennent

    (a) un polyesteramide contenant des groupes carboxyle terminaux tel que défini dans l'une quelconque des revendications 1 à 14 et
    (b) un composé polyépoxydé.

**19.** Compositions selon la revendication 18, caractérisées en ce que le composé polyépoxydé est un composé monomère solide ou une résine polymère solide à la température ordinaire, contenant en moyenne au moins deux groupes époxy.

**20.** Compositions selon l'une quelconque des revendications 18 et 19, caractérisées en ce que le composé polyépoxydé est l'isocyanurate de triglycidyle ou le diglycidyléther de bisphénol A.

**21.** Compositions selon l'une quelconque des revendications 18 à 20, caractérisées en ce qu'on utilise le composé polyépoxydé à raison de 0,7 à 1,3, de préférence de 0,95 à 1,05 équivalent de groupes époxy par équivalent de groupes carboxyle dans le polyesteramide contenant des groupes carboxyle terminaux.

**22.** Procédé de revêtement d'un article, de préférence métallique, caractérisé en ce qu'on applique sur ledit article une composition thermodurcissable en poudre selon l'une quelconque des revendications 18 à 21 par pulvérisation, de préférence au moyen d'un pistolet pulvérisateur tribo-électrique, et en ce qu'on fait subir au revêtement ainsi obtenu une cuisson à une température de 140 à 220°C, de préférence de 160 à 200°C, pendant une durée pouvant atteindre 30 minutes.

**23.** Articles revêtus entièrement ou partiellement par le procédé selon la revendication 22.

**Revendications pour l'Etat contractant suivant : ES**

**1.** Procédé de préparation de polyesteramides comprenant les produits de réaction d'au moins une diamine et d'un polyester contenant des groupes carboxyle terminaux, caractérisé en ce que

    (1) on prépare d'abord un polyester contenant des groupes carboxyle terminaux, à chaîne linéaire ou ramifiée, à partir d'au moins un acide dicarboxylique aliphatique et/ou cycloaliphatique et d'au moins un polyol dans les proportions molaires requises pour obtenir des groupes carboxyle en bout de chaîne, et
    (2) on fait réagir ensuite le polyester contenant des groupes carboxyle terminaux préparé en (1) avec au moins une diamine.

**2.** Procédé de préparation de polyesteramides comprenant les produits de réaction d'au moins une diamine et d'un polyester contenant des groupes carboxyle terminaux, caractérisé en ce que

    (1) on prépare d'abord un polyester contenant des groupes hydroxyle terminaux, à chaîne linéaire ou ramifiée, à partir d'au moins un acide polycarboxylique aromatique et/ou aliphatique et/ou cycloaliphatique et d'au moins un polyol dans les proportions requises pour obtenir des groupes hydroxyle en bout de chaîne;
    (2) on estérifie ensuite le polyester contenant des groupes hydroxyle terminaux préparé en (1) avec au moins un acide dicarboxylique choisi parmi les acides dicarboxyliques aliphatiques, les acides dicarboxyliques cycloaliphatiques et l'acide isophtalique pour obtenir un polyester contenant des groupes carboxyle terminaux, et
    (3) finalement, on fait réagir le polyester contenant des groupes carboxyle terminaux préparé en (2) avec au moins une diamine.

**3.** Procédé de préparation de polyesteramides comprenant les produits de réaction d'au moins une diamine et d'un polyester contenant des groupes carboxyle terminaux, caractérisé en ce que

    (1) on prépare d'abord un polyester contenant des groupes hydroxyle terminaux, à chaîne linéaire ou ramifiée, à partir d'au moins un acide polycarboxylique aromatique et/ou aliphatique et/ou cycloaliphatique et d'au moins un polyol dans les proportions requises pour obtenir des groupes hydroxyle en bout de chaîne;
    (2) on estérifie ensuite le polyester contenant des groupes hydroxyle terminaux préparé en (1) avec de l'acide isophtalique dans les proportions requises pour obtenir un polyester contenant à la fois des groupes hydroxyle et carboxyle terminaux;

(3) on estérifie ensuite le polyester contenant à la fois des groupes hydroxyle et carboxyle terminaux préparé en (2) avec au moins un acide dicarboxylique aliphatique et/ou cycloaliphatique pour obtenir un polyester contenant des groupes carboxyle terminaux, et

(4) finalement, on fait réagir le polyester contenant des groupes carboxyle terminaux préparé en (3) avec au moins une diamine.

4. Procédé selon l'une quelconque des revendications 1 à 3, caractérisé en ce que les polyesteramides présentent un indice d'acide de 10 à 100 mg de KOH/g, avantageusement de 20 à 70 mg de KOH/g et un poids moléculaire moyen en nombre compris entre 1.000 et 16.000, de préférence entre 1.500 et 8.500.

5. Procédé selon l'une quelconque des revendications 1 à 4, caractérisé en ce que la diamine est une diamine diprimaire, disecondaire ou à la fois primaire et secondaire, de préférence une diamine diprimaire.

6. Procédé selon l'une quelconque des revendications 1 à 5, caractérisé en ce que la diamine est une diamine aliphatique, cycloaliphatique ou aromatique, de préférence une diamine aliphatique ou cycloaliphatique.

7. Procédé selon l'une quelconque des revendications 1 à 6, caractérisé en ce que la diamine est choisie parmi l'éthylènediamine, la 1,3-propanediamine, la 1,5-pentanediamine, la 1,6-hexanediamine, les 1,2-, 1,3- et 1,4-cyclohexanediamines, la 2,2-diméthyl-1,3-propanediamine, la N-(2-aminoéthyl)-1,2-éthanediamine, le 3,3'-diméthyl-4,4'-diaminodicyclohexylméthane, le 4,4'-diaminodicyclohexylméthane, le 3,3'-diméthyl-4,4'-diaminodiphénylméthane et le 4,4'-diaminodiphénylméthane, seuls ou en mélange.

8. Procédé selon l'une quelconque des revendications 1 à 7, caractérisé en ce que le polyol est un polyol aliphatique, cycloaliphatique ou aromatique dihydroxylé à tétrahydroxylé.

9. Procédé selon la revendication 8, caractérisé en ce que le polyol est choisi parmi le néopentylglycol, l'éthylèneglycol, le diéthylèneglycol, le 1,2-propanediol, le 1,3-propanediol, le 1,4-butanediol, le 1,5-pentanediol, le 1,6-hexanediol, l'hydroxypivalate de néopentylglycol, le bisphénol A, le 1,4-cyclohexanediméthanol, le 2,2-bis(4-hydroxycyclohexyl)-propane, le triméthylolpropane, le di-triméthylolpropane et le pentaérythritol, seuls ou en mélange.

10. Procédé selon l'une quelconque des revendications 1 à 9, caractérisé en ce que l'acide di- ou polycarboxylique aliphatique ou cycloaliphatique est choisi parmi l'acide adipique, l'acide succinique, l'acide glutarique, l'acide sébacique, l'acide azélaïque, les acides 1,2-, 1,3- et 1,4-cyclohexanedicarboxyliques, l'acide tétrahydrophtalique, l'acide hexahydrophtalique, ainsi que parmi leurs anhydrides, seuls ou en mélange.

11. Procédé selon l'une quelconque des revendications 1 à 10, caractérisé en ce que l'acide polycarboxylique aromatique est choisi parmi l'acide o-phtalique, l'acide isophtalique, l'acide téréphtalique, l'acide 1,2,4-benzènetricarboxylique et l'acide 1,3,5-benzènetricarboxylique, ainsi que parmi leurs anhydrides, seuls ou en mélange.

12. Procédé selon l'une quelconque des revendications 1 à 11, caractérisé en ce que l'indice d'acide du polyester contenant des groupes carboxyle terminaux est de 20 à 200 mg de KOH/g, avantageusement de 30 à 110 mg de KOH/g.

13. Procédé selon l'une quelconque des revendications 2 à 12, caractérisé en ce que l'indice d'hydroxyle du polyester contenant des groupes hydroxyle terminaux est de 30 à 400 mg de KOH/g, avantageusement de 50 à 150 mg de KOH/g.

14. Procédé selon l'une quelconque des revendications 3 à 13, caractérisé en ce que la différence entre l'indice d'hydroxyle et l'indice d'acide du polyester contenant à la fois des groupes hydroxyle et carboxyle terminaux préparé en (2) est comprise entre -100 et +100 mg de KOH/g, avantageusement entre -50 et +50 mg de KOH/g.

15. Procédé selon l'une quelconque des revendications 3 à 14, caractérisé en ce que le rapport molaire entre l'acide dicarboxylique aliphatique et/ou cycloaliphatique utilisé en (3) et l'acide isophtalique utilisé en (2) est compris dans l'intervalle de 1/99 à 99/1.

16. Procédé selon l'une quelconque des revendications 1 à 15, caractérisé en ce que la quantité de diamine mise en oeuvre est comprise entre 1 et 20 parties en poids, de préférence de 1 à 10 parties en poids pour 100 parties en poids de polyesteramide contenant des groupes carboxyle terminaux à obtenir.

17. Compositions thermodurcissables en poudre, caractérisées en ce qu'elles comprennent

   (a) un polyesteramide contenant des groupes carboxyle terminaux tel que préparé par un procédé selon l'une quelconque des revendications 1 à 16 et
   (b) un composé polyépoxydé.

18. Compositions selon la revendication 17, caractérisées en ce que le composé polyépoxydé est un composé monomère solide ou une résine polymère solide à la température ordinaire, contenant en moyenne au moins deux groupes époxy.

19. Compositions selon l'une quelconque des revendications 17 et 18, caractérisées en ce que le composé polyépoxydé est l'isocyanurate de triglycidyle ou le diglycidyléther de bisphénol A.

20. Compositions selon l'une quelconque des revendications 17 à 19, caractérisées en ce qu'on utilise le composé polyépoxydé à raison de 0,7 à 1,3, de préférence de 0,95 à 1,05 équivalent de groupes époxy par équivalent de groupes carboxyle dans le polyesteramide contenant des groupes carboxyle terminaux.

21. Procédé de revêtement d'un article, de préférence métallique, caractérisé en ce qu'on applique sur ledit article une composition thermodurcissable en poudre selon l'une quelconque des revendications 17 à 20 par pulvérisation, de préférence au moyen d'un pistolet pulvérisateur tribo-électrique, et en ce qu'on fait subir au revêtement ainsi obtenu une cuisson à une température de 140 à 220°C, de préférence de 160 à 200°C, pendant une durée pouvant atteindre 30 minutes.

22. Articles revêtus entièrement ou partiellement par le procédé selon la revendication 21.

**Patentansprüche**

**Patentansprüche für folgende Vertragsstaaten : AT, BE, CH, DE, DK, FR, GB, GR, IT, LI, LU, MC, NL, SE**

1. Endständige Carboxylgruppen enthaltende Polyesteramide, die die Reaktionsprodukte wenigstens eines Diamins und eines Polyesters mit endständigen Carboxylgruppen umfassen, wobei besagter Polyester mit endständigen Carboxylgruppen ausgewählt ist unter

   (a) einem Polyester, der aus wenigstens einer aliphatischen und/oder cycloaliphatischen Dicarbonsäure und wenigstens einem Polyol hergestellt ist;
   (b) einem Polyester, der das Reaktionsprodukt ist von

      (i) wenigstens einer Dicarbonsäure, die unter aliphatischen Dicarbonsäuren, cycloaliphatischen Dicarbonsäuren und Isophtalsäure ausgewählt ist, mit
      (ii) einem Polyester mit endständigen Hydroxylgruppen, der aus wenigstens einer aromatischen und/oder aliphatischen und/oder cycloaliphatischen Polycarbonsäure und wenigstens einem Polyol hergestellt ist; und

   (c) einem Polyester, der das Reaktionsprodukt ist von

      (i) wenigstens einer aliphatischen und/oder cycloaliphatischen Dicarbonsäure mit
      (ii) einem Polyester, der gleichzeitig endständige Hydroxyl- und Carboxylgruppen enthält, der hergestellt ist durch Veresterung von
      (iii) Isophthalsäure mit
      (iv) einem Polyester mit endständigen Hydroxylgruppen, der aus wenigstens einer aromatischen und/oder aliphatischen und/oder cycloaliphatischen Polycarbonsäure und wenigstens einem Polyol hergestellt ist.

2. Polyesteramide gemäß Anspruch 1, dadurch gekennzeichnet, daß sie eine Säurezahl von 10 bis 100 mg KOH/g, vorteilhafterweise von 20 bis 70 mg KOH/g, und ein Zahlenmittel des Molekulargewichts zwischen 1.000 und 16.000, vorzugsweise zwischen 1.500 und 8.500, aufweisen.

3. Polyesteramide gemäß Anspruch 1 oder 2, dadurch gekennzeichnet, daß das Diamin ein diprimäres, disekundäres oder ein gleichzeitig primäres und sekundäres Diamin, vorzugsweise ein diprimäres Diamin, ist.

4. Polyesteramide gemäß einem der Ansprüche 1 bis 3, dadurch gekennzeichnet, daß das Diamin ein aliphatisches, cycloaliphatisches oder aromatisches Diamin, vorzugsweise ein aliphatisches oder cycloaliphatisches Diamin, ist.

5. Polyesteramide gemäß einem der Ansprüche 1 bis 4, dadurch gekennzeichnet, daß das Diamin unter Ethylendiamin, 1,3-Propandiamin, 1,5-Pentandiamin, 1,6-Hexandiamin, 1,2-, 1,3- und 1,4-Cyclohexandiamin, 2,2-Dimethyl-1,3-propandiamin, N-(2-Aminoethyl)-1,2-ethandiamin, 3,3'-Dimethyl-4,4'-diaminodicyclohexylmethan, 4,4'-Diaminodicyclohexylmethan, 3,3'-Dimethyl-4,4'-diaminodiphenylmethan und 4,4'-Diaminodiphenylmethan allein oder im Gemisch ausgewählt ist.

6. Polyesteramide gemäß einem der Ansprüche 1 bis 5, dadurch gekennzeichnet, daß das Polyol ein dihydroxyliertes bis tetrahydroxyliertes aliphatisches, cycloaliphatisches oder aromatisches Polyol ist.

7. Polyesteramide gemäß Anspruch 6, dadurch gekennzeichnet daß das Polyol unter Neopentylglykol, Ethylenglykol, Diethylenglykol, 1,2-Propandiol, 1,3-Propandiol, 1,4-Butandiol, 1,5-Pentandiol, 1,6-Hexandiol, Neopentylglykolhydroxypivalat, Bisphenol A, 1,4-Cyclohexandimethanol, 2,2-Bis(4-hydroxycyclohexyl)propan, Trimethylolpropan, Di-trimethylolpropan und Pentaerythritol allein oder im Gemisch ausgewählt ist.

8. Polyesteramide gemäß einem der Ansprüche 1 bis 7, dadurch gekennzeichnet, daß die aliphatische oder cycloaliphatische Di- oder Polycarbonsäure unter Adipinsäure, Bernsteinsäure, Glutarsäure, Sebacinsäure, Azelainsäure, 1,2-, 1,3- und 1,4-Cyclohexandicarbonsäure, Tetrahydrophthalsäure, Hexahydrophthalsäure, sowie unter ihren Anhydriden, allein oder im Gemisch ausgewählt ist.

9. Polyesteramide gemäß einem der Ansprüche 1 bis 8, dadurch gekennzeichnet, daß die aromatische Polycarbonsäure unter o-Phthalsäure, Isophthalsäure, Terephthalsäure, 1,2,4-Benzoltricarbonsäure und 1,3,5-Benzoltricarbonsäure, sowie unter ihren Anhydriden, allein oder im Gemisch ausgewählt ist.

10. Polyesteramide gemäß einem der Ansprüche 1 bis 9, dadurch gekennzeichnet, daß die Säurezahl des Polyesters mit endständigen Carboxylgruppen 20 bis 200 mg KOH/g, vorteilhafterweise 30 bis 110 mg KOH/g, beträgt.

11. Polyesteramide gemäß einem der Ansprüche 1 bis 10, dadurch gekennzeichnet, daß die Hydroxylzahl des Polyesters mit endständigen Hydroxylgruppen 30 bis 400 mg KOH/g, vorteilhafterweise 50 bis 150 mg KOH/g, beträgt.

12. Polyesteramide gemäß einem der Ansprüche 1 bis 11, dadurch gekennzeichnet, daß die Differenz zwischen der Hydroxylzahl und der Säurezahl des Polyesters, der gleichzeitig endständige Hydroxyl- und Carboxylgruppen enthält, zwischen -100 und +100 mg KOH/g, vorteilhafterweise zwischen -50 und +50 mg KOH/g, liegt.

13. Polyesteramide gemäß einem der Ansprüche 1 bis 12, dadurch gekennzeichnet, daß das Molverhältnis zwischen der aliphatischen und/oder cycloaliphatischen Dicarbonsäure und Isophthalsäure in dem Polyester mit endständigen Carboxylgruppen (c) im Bereich von 1/99 bis 99/1 liegt.

14. Polyesteramide gemäß einem der Ansprüche 1 bis 13, dadurch gekennzeichnet, daß die Menge des Diamins zwischen 1 und 20 Gewichtsteilen, vorzugsweise 1 bis 10 Gewichtsteile, pro 100 Gewichtsteile Polyesteramid mit endständigen Carboxylgruppen beträgt.

15. Verfahren zur Herstellung von Polyesteramiden gemäß Anspruch 1, dadurch gekennzeichnet, daß

(1) man zuerst einen Polyester mit linearer oder verzweiger Kette, der endständige Carboxylgruppen enthält, aus wenigstens einer aliphatischen und/oder cycloaliphatischen Dicarbonsäure und wenigstens einem Polyol in für den Erhalt von Carboxylgruppen am Kettenende erforderlichen Molverhältnissen herstellt und
(2) man dann den in (1) hergestellten Polyester mit endständigen Carboxylgruppen mit wenigstens einem Diamin umsetzt.

**16.** Verfahren zur Herstellung von Polyesteramiden gemäß Anspruch 1, dadurch gekennzeichnet, daß

(1) man zuerst einen Polyester mit linearer oder verzweigter Kette, der endständige Hydroxylgruppen enthält, aus wenigstens einer aromatischen und/oder aliphatischen und/oder cycloaliphatischen Polycarbonsäure und wenigstens einem Polyol in für den Erhalt von Hydroxylgruppen am Kettenende erforderlichen Verhältnissen herstellt;
(2) man dann den in (1) hergestellten Polyester mit endständigen Hydroxylgruppen mit wenigstens einer Dicarbonsäure, die unter aliphatischen Dicarbonsäuren, cycloaliphatischen Dicarbonsäuren und Isophthalsäure ausgewählt ist, verestert, wobei ein Polyester mit endständigen Carboxylgruppen erhalten wird, und
(3) man schließlich den in (2) hergestellten Polyester mit endständigen Carboxylgruppen mit wenigstens einem Diamin umsetzt.

**17.** Verfahren zur Herstellung von Polyesteramiden gemäß Anspruch 1, dadurch gekennzeichnet, daß

(1) man zuerst einen Polyester mit linearer oder verzweigter Kette, der endständige Hydroxylgruppen enthält, aus wenigstens einer aromatischen und/oder aliphatischen und/oder cycloaliphatischen Polycarbonsäure und wenigstens einem Polyol in für den Erhalt von Hydroxylgruppen am Kettenende erforderlichen Verhältnissen herstellt;
(2) man dann den in (1) hergestellten Polyester mit endständigen Hydroxylgruppen mit Isophthalsäure in für den Erhalt eines Polyesters, der gleichzeitig endständige Hydroxyl- und Carboxylgruppen enthält, erforderlichen Verhältnissen verestert;
(3) man dann den in (2) hergestellten Polyester, der gleichzeitig endständige Hydroxyl- und Carboxylgruppen enthält, mit wenigstens einer aliphatischen und/oder cycloaliphatischen Dicarbonsäure verestert, wobei ein Polyester mit endständigen Carboxylgruppen erhalten wird, und
(4) man schließlich den in (3) hergestellten Polyester mit endständigen Carboxylgruppen mit wenigstens einem Diamin umsetzt.

**18.** Pulverförmige warmhärtende Zusammensetzungen, dadurch gekennzeichnet, daß sie umfassen

(a) ein Polyesteramid mit endständigen Carboxylgruppen, so wie in einem der Ansprüche 1 bis 14 definiert, und
(b) eine Polyepoxidverbindung.

**19.** Zusammensetzungen gemäß Anspruch 18, dadurch gekennzeichnet, daß die Polyepoxidverbindung eine feste Monomerverbindung oder ein bei Raumtemperatur festes Polymerharz ist, das im Mittel wenigstens zwei Epoxygruppen enthält.

**20.** Zusammensetzungen gemäß einem der Ansprüche 18 und 19, dadurch gekennzeichnet, daß die Polyepoxidverbindung Triglycidylisocyanurat oder Bisphenol-A-diglycidylether ist.

**21.** Zusammensetzungen gemäß einem der Ansprüche 18 bis 20, dadurch gekennzeichnet, daß man die Polyepoxidverbindung in einer Menge von 0,7 bis 1,3, vorzugsweise von 0,95 bis 1,05, Äquivalente Epoxygruppen pro Äquivalent Carboxylgruppen in dem Polyesteramid mit endständigen Carboxylgruppen verwendet.

**22.** Verfahren zur Beschichtung eines vorzugsweise metallischen Gegenstandes, dadurch gekennzeichnet, daß man auf besagtem Gegenstand eine pulverförmige warmhärtende Zusammensetzung gemäß einem der Ansprüche 18 bis 21 durch Spritzen, vorzugsweise mit einer triboelektrischen Spritzpistole, aufbringt und dadurch, daß man die so erhaltene Beschichtung bei einer Temperatur von 140 bis 220 °C, vorzugsweise 160 bis 200 °C, während einer Zeit, die 30 Minuten erreichen kann, aushärtet.

**23.** Ganz oder teilweise durch das Verfahren gemäß Anspruch 22 beschichtete Gegenstände.

**Patentansprüche für folgende Vertragsstaat : ES**

**1.** Verfahren.zur Herstellung von Polyesteramiden, die die Reaktionsprodukte wenigstens eines Diamins und eines Polyesters mit endständigen Carboxylgruppen umfassen, dadurch gekennzeichnet, daß

(1) man zuerst einen Polyester mit linearer oder verzweigter Kette, der endständige Carboxylgruppen enthält, aus wenigstens einer aliphatischen und/oder cycloaliphatischen Dicarbonsäure und wenigstens einem Polyol in für den Erhalt von Carboxylgruppen am Kettenende erforderlichen Molverhältnissen herstellt und
(2) man dann den in (1) hergestellten Polyester mit endständigen Carboxylgruppen mit wenigstens einem Diamin umsetzt.

2. Verfahren zur Herstellung von Polyesteramiden, die die Reaktionsprodukte wenigstens eines Diamins und eines Polyesters mit endständigen Carboxylgruppen umfassen, dadurch gekennzeichnet, daß

(1) man zuerst einen Polyester mit linearer oder verzweigter Kette, der endständige Hydroxylgruppen enthält, aus wenigstens einer aromatischen und/oder aliphatischen und/oder cycloaliphatischen Polycarbonsäure und wenigstens einem Polyol in für den Erhalt von Hydroxylgruppen am Kettenende erforderlichen Verhältnissen herstellt;
(2) man dann den in (1) hergestellten Polyester mit endständigen Hydroxylgruppen mit wenigstens einer Dicarbonsäure, die unter aliphatischen Dicarbonsäuren, cycloaliphatischen Dicarbonsäuren und Isophthalsäure ausgewählt ist, verestert, wobei ein Polyester mit endständigen Carboxylgruppen erhalten wird, und
(3) man schließlich den in (2) hergestellten Polyester mit endständigen Carboxylgruppen mit wenigstens einem Diamin umsetzt.

3. Verfahren zur Herstellung von Polyesteramiden, die die Reaktionsprodukte wenigstens eines Diamins und eines Polyesters mit endständigen Carboxylgruppen umfassen, dadurch gekennzeichnet, daß

(1) man zuerst einen Polyester mit linearer oder verzweigter Kette, der endständige Hydroxylgruppen enthält, aus wenigstens einer aromatischen und/oder aliphatischen und/oder cycloaliphatischen Polycarbonsäure und wenigstens einem Polyol in für den Erhalt von Hydroxylgruppen am Kettenende erforderlichen Verhältnissen herstellt;
(2) man dann den in (1) hergestellten Polyester mit endständigen Hydroxylgruppen mit Isophthalsäure in für den Erhalt eines Polyesters, der gleichzeitig endständige Hydroxyl- und Carboxylgruppen enthält, erforderlichen Verhältnissen verestert;
(3) man dann den in (2) hergestellten Polyester, der gleichzeitig endständige Hydroxyl- und Carboxylgruppen enthält, mit wenigstens einer aliphatischen und/oder cycloaliphatischen Dicarbonsäure verestert, wobei ein Polyester mit endständigen Carboxylgruppen erhalten wird, und
(4) man schließlich den in (3) hergestellten Polyester mit endständigen Carboxylgruppen mit wenigstens einem Diamin umsetzt.

4. Verfahren gemäß einem der Ansprüche 1 bis 3, dadurch gekennzeichnet, daß die Polyesteramide einer Säurezahl von 10 bis 100 mg KOH/g, vorteilhafterweise von 20 bis 70 mg KOH/g, und ein Zahlenmittel des Molekulargewichts in Zahlen zwischen 1.000 und 16.000, vorzugsweise zwischen 1.500 und 8.500, aufweisen.

5. Verfahren gemäß einem der Ansprüche 1 bis 4, dadurch gekennzeichnet, daß das Diamin ein diprimäres, disekundäres oder ein gleichzeitig primäres und sekundäres Diamin, vorzugsweise ein diprimäres Diamin, ist.

6. Verfahren gemäß einem der Ansprüche 1 bis 5, dadurch gekennzeichnet, daß das Diamin ein aliphatisches, cycloaliphatisches oder aromatisches Diamin, vorzugsweise ein aliphatisches oder cycloaliphatisches Diamin, ist.

7. Verfahren gemäß einem der Ansprüche 1 bis 6, dadurch gekennzeichnet, daß das Diamin unter Ethylendiamin, 1,3-Propandiamin, 1,5-Pentandiamin, 1,6-Hexandiamin, 1,2-, 1,3- und 1,4-Cyclohexandiamin, 2,2-Dimethyl-1,3-propandiamin, N-(2-Aminoethyl)-1,2-ethandiamin, 3,3'-Dimethyl-4,4'-diaminodicyclohexylmethan, 4,4'-Diaminodicyclohexylmethan, 3,3'-Dimethyl-4,4'-diaminodiphenylmethan und 4,4'-Diaminodiphenylmethan allein oder im Gemisch ausgewählt ist.

8. Verfahren gemäß einem der Ansprüche 1 bis 7, dadurch gekennzeichnet, daß das Polyol ein dihydroxyliertes bis tetrahydroxyliertes aliphatisches, cycloaliphatisches oder aromatisches Polyol ist.

9. Verfahren gemäß Anspruch 8, dadurch gekennzeichnet, daß das Polyol unter Neopentylglykol, Ethylenglykol, Diethylenglykol, 1,2-Propandiol, 1,3-Propandiol, 1,4-Butandiol, 1,5-Pentandiol, 1,6-Hexandiol, Neopentylglykolhydroxypivalat, Bisphenol A, 1,4-Cyclohexandimethanol, 2,2-Bis(4-hydroxycyclohexyl)-propan, Trimethylolpropan, Di-trimethylolpropan und Pentaerythritol allein oder im Gemisch ausgewählt ist.

**10.** Verfahren gemäß einem der Ansprüche 1 bis 9, dadurch gekennzeichnet, daß die aliphatische oder cycloaliphatische Di- oder Polycarbonsäure unter Adipinsäure, Bernsteinsäure, Glutarsäure, Sebacinsäure, Azelainsäure, 1,2-, 1,3- und 1,4-Cyclohexandicarbonsäure, Tetrahydrophthalsäure, Hexahydrophthalsäure, sowie unter ihren Anhydriden, allein oder im Gemisch ausgewählt ist.

**11.** Verfahren gemäß einem der Ansprüche 1 bis 10, dadurch gekennzeichnet, daß die aromatische Polycarbonsäure unter o-Phthalsäure, Isophthalsäure, Terephthalsäure, 1,2,4-Benzoltricarbonsäure und 1,3,5-Benzoltricarbonsäure, sowie unter ihren Anhydriden, allein oder im Gemisch ausgewählt ist.

**12.** Verfahren gemäß einem der Ansprüche 1 bis 11, dadurch gekennzeichnet, daß die Säurezahl des Polyesters mit endständigen Carboxylgruppen 20 bis 200 mg KOH/g, vorteilhafterweise 30 bis 110 mg KOH/g, beträgt.

**13.** Verfahren gemäß einem der Ansprüche 2 bis 12, dadurch gekennzeichnet, daß die Hydroxylzahl des Polyesters mit endständigen Hydroxylgruppen 30 bis 400 mg KOH/g, vorteilhafterweise 50 bis 150 mg KOH/g, beträgt.

**14.** Verfahren gemäß einem der Ansprüche 3 bis 13, dadurch gekennzeichnet, daß die Differenz zwischen der Hydroxylzahl und der Säurezahl des in (2) hergestellten Polyesters, der gleichzeitig endständige Hydroxyl- und Carboxylgruppen enthält, zwischen -100 und +100 mg KOH/g, vorteilhafterweise zwischen -50 und +50 mg KOH/g, liegt.

**15.** Verfahren gemäß einem der Ansprüche 3 bis 14, dadurch gekennzeichnet, daß das Molverhältnis zwischen der in (3) verwendeten aliphatischen und/oder cycloaliphatischen Dicarbonsäure und der in (2) verwendeten Isophthalsäure im Bereich von 1/99 bis 99/1 liegt.

**16.** Verfahren gemäß einem der Ansprüche 1 bis 15, dadurch gekennzeichnet, daß die eingesetzte Menge des Diamins zwischen 1 und 20 Gewichtsteilen, vorzugsweise 1 bis 10 Gewichtsteile, pro 100 Gewichtsteile des zu erhaltenden Polyesteramids mit endständigen Carboxylgruppen beträgt.

**17.** Pulverförmige warmhärtende Zusammensetzungen, dadurch gekennzeichnet, daß sie umfassen

      (a) ein Polyesteramid mit endständigen Carboxylgruppen, so wie durch ein Verfahren gemäß einem der Ansprüche 1 bis 16 hergestellt, und
      (b) eine Polyepoxidverbindung.

**18.** Zusammensetzungen gemäß Anspruch 17, dadurch gekennzeichnet, daß die Polyepoxidverbindung eine feste Monomerverbindung oder ein bei Raumtemperatur festes Polymerharz ist, das im Mittel wenigstens zwei Epoxygruppen enthält.

**19.** Zusammensetzungen gemäß einem der Ansprüche 17 und 18, dadurch gekennzeichnet, daß die Polyepoxidverbindung Triglycidylisocyanurat oder Bisphenol-A-diglycidylether ist.

**20.** Zusammensetzungen gemäß einem der Ansprüche 17 bis 19, dadurch gekennzeichnet, daß man die Polyepoxidverbindung in einer Menge von 0,7 bis 1,3, vorzugsweise von 0,95 bis 1,05, Äquivalente Epoxygruppen pro Äquivalent Carboxylgruppen in dem Polyesteramid mit endständigen Carboxylgruppen verwendet.

**21.** Verfahren zur Beschichtung eines vorzugsweise metallischen Gegenstandes, dadurch gekennzeichnet, daß man auf besagtem Gegenstand eine pulverförmige warmhärtende Zusammensetzung gemäß einem der Ansprüche 17 bis 20 durch Spritzen, vorzugsweise mit einer triboelektrischen Spritzpistole, aufbringt und dadurch, daß man die so erhaltene Beschichtung bei einer Temperatur von 140 bis 220 °C, vorzugsweise 160 bis 200 °C, während einer Zeit, die 30 Minuten erreichen kann, aushärtet.

**22.** Ganz oder teilweise durch das Verfahren gemäß Anspruch 21 beschichtete Gegenstände.

## Claims

**Claims for the following Contracting States : AT, BE, CH, DE, DK, FR, GB, GR, IT, LI, LU, MC, NL, SE.**

1. Carboxyl group-terminated polyesteramides which comprise the reaction products of at least one diamine and a carboxyl group-terminated polyester, said carboxyl group-terminated polyester being chosen from

   (a) a polyester prepared from at least one aliphatic and/or cycloaliphatic dicarboxylic acid and at least one polyol;
   (b) a polyester which is the reaction product of

   (i) at least one dicarboxylic acid chosen from aliphatic dicarboxylic acids, cycloaliphatic dicarboxylic acids and isophthalic acid, with
   (ii) a hydroxyl group-terminated polyester prepared from at least one aromatic and/or aliphatic and/or cycloaliphatic polycarboxylic acid and at least one polyol; and

   (c) a polyester which is the reaction product of

   (i) at least one aliphatic and/or cycloaliphatic dicarboxylic acid with
   (ii) a polyester containing both terminal hydroxyl and terminal carboxyl groups, prepared by esterification of
   (iii) isophthalic acid with
   (iv) a hydroxyl group-terminated polyester prepared from at least one aromatic and/or aliphatic and/or cycloaliphatic polycarboxylic acid and at least one polyol.

2. Polyesteramides according to claim 1, characterised in that they have an acid number of from 10 to 100 mg of KOH/g, advantageously of from 20 to 70 mg of KOH/g, and a number-average molecular weight of between 1,000 and 16,000, preferably between 1,500 and 8,500.

3. Polyesteramides according to claim 1 or 2, characterised in that the diamine is a diprimary diamine, a disecondary diamine or a diamine which is both primary and secondary, preferably a diprimary diamine.

4. Polyesteramides according to any of claims 1 to 3, characterised in that the diamine is an aliphatic, a cycloaliphatic or an aromatic diamine, preferably an aliphatic or a cycloaliphatic diamine.

5. Polyesteramides according to any of claims 1 to 4, characterised in that the diamine is chosen from ethylenediamine, 1,3-propanediamine, 1,5-pentanediamine, 1,6-hexanediamine, the 1,2-, 1,3- and 1,4-cyclohexanediamines, 2,2-dimethyl-1,3-propanediamine, N-(2-aminoethyl)-1,2-ethanediamine, 3,3'-dimethyl-4,4'-diaminodicyclohexylmethane, 4,4'-diaminodicyclohexylmethane, 3,3'-dimethyl-4,4'-diaminodiphenylmethane and 4,4'-diaminodiphenylmethane, alone or in admixture.

6. Polyesteramides according to any of claims 1 to 5, characterised in that the polyol is a dihydric to tetrahydric aliphatic, cycloaliphatic or aromatic polyol.

7. Polyesteramides according to claim 6, characterised in that the polyol is chosen from neopentylglycol, ethyleneglycol, diethyleneglycol, 1,2-propanediol, 1,3-propanediol, 1,4-butanediol, 1,5-pentanediol, 1,6-hexanediol, neopentylglycol hydroxypivalate, bisphenol A, 1,4-cyclohexanedimethanol, 2,2-bis(4-hydroxycyclohexyl)-propane, trimethylolpropane, ditrimethylolpropane and pentaerythritol, alone or in admixture.

8. Polyesteramides according to any of claims 1 to 7, characterised in that the aliphatic or cycloaliphatic di- or polycarboxylic acid is chosen from adipic acid, succinic acid, glutaric acid, sebacic acid, azelaic acid, the 1,2-, 1,3- and 1,4-cyclohexanedicarboxylic acids, tetrahydrophthalic acid, hexahydrophthalic acid, as well as from the anhydrides thereof, alone or in admixture.

9. Polyesteramides according to any of claims 1 to 8, characterised in that the aromatic polycarboxylic acid is chosen from o-phthalic acid, isophthalic acid, terephthalic acid, 1,2,4-benzenetricarboxylic acid, and 1,3,5-benzenetricarboxylic acid, as well as from the anhydrides thereof, alone or in admixture.

10. Polyesteramides according to any of claims 1 to 9, characterised in that the acid number of the carboxyl group-terminated polyester is from 20 to 200 mg of KOH/g, advantageously from 30 to 110 mg of KOH/g.

11. Polyesteramides according to any of claims 1 to 10, characterised in that the hydroxyl number of the hydroxyl group-terminated polyester is from 30 to 400 mg of KOH/g, advantageously from 50 to 150 mg of KOH/g.

12. Polyesteramides according to any of claims 1 to 11, characterised in that the difference between the hydroxyl number and the acid number of the polyester containing both terminal hydroxyl and terminal carboxyl groups is between -100 and +100 mg of KOH/g, advantageously between -50 and +50 mg of KOH/g.

13. Polyesteramides according to any of claims 1 to 12, characterised in that the molar ratio between the aliphatic and/or cycloaliphatic dicarboxylic acid and the isophthalic acid in the carboxyl group-terminated polyester (c) is in the range of from 1/99 to 99/1.

14. Polyesteramides according to any of claims 1 to 13, characterised in that the amount of diamine is between 1 and 20 parts by weight, preferably from 1 to 10 parts by weight per 100 parts by weight of carboxyl group-terminated polyesteramide.

15. Process for the preparation of polyesteramides according to claim 1, characterised in that

(1) first, a straight- or branched-chain carboxyl group-terminated polyester is prepared, from at least one aliphatic and/or cycloaliphatic dicarboxylic acid and at least one polyol in the molar proportions required to obtain carboxyl groups at the end of the chain, and
(2) then, the carboxyl group-terminated polyester prepared in (1) is reacted with at least one diamine.

16. Process for the preparation of polyesteramides according to claim 1, characterised in that

(1) first, a straight- or branched-chain hydroxyl group-terminated polyester is prepared, from at least one aromatic and/or aliphatic and/or cycloaliphatic polycarboxylic acid and at least one polyol in the proportions required to obtain hydroxyl groups at the end of the chain;
(2) then, the hydroxyl group-terminated polyester prepared in (1) is esterified with at least one dicarboxylic acid chosen from aliphatic dicarboxylic acids, cycloaliphatic dicarboxylic acids and isophthalic acid to obtain a carboxyl group-terminated polyester, and
(3) finally, the carboxyl group-terminated polyester prepared in (2) is reacted with at least one diamine.

17. Process for the preparation of polyesteramides according to claim 1, characterised in that

(1) first, a straight- or branched-chain hydroxyl group-terminated polyester is prepared, from at least one aromatic and/or aliphatic and/or cycloaliphatic polycarboxylic acid and at least one polyol in the proportions required to obtain hydroxyl groups at the end of the chain;
(2) then, the hydroxyl group-terminated polyester prepared in (1) is esterified with isophthalic acid in the proportions required to obtain a polyester containing both terminal hydroxyl and terminal carboxyl groups;
(3) then, the polyester containing both terminal hydroxyl and terminal carboxyl groups prepared in (2) is esterified with at least one aliphatic and/or cycloaliphatic dicarboxylic acid to obtain a carboxyl group-terminated polyester, and
(4) finally, the carboxyl group-terminated polyester prepared in (3) is reacted with at least one diamine.

18. Powdered thermosetting compositions characterised in that they comprise

(a) a carboxyl group-terminated polyesteramide as defined in any of claims 1 to 14 and
(b) a polyepoxy compound.

19. Compositions according to claim 18, characterised in that the polyepoxy compound is a solid monomer compound or a polymer resin which is solid at room temperature, containing an average of at least two epoxy groups.

20. Compositions according to any of claims 18 and 19, characterised in that the polyepoxy compound is triglycidyl isocyanurate or bisphenol A diglycidyl ether.

21. Compositions according to any of claims 18 to 20, characterised in that the polyepoxy compound is used in an amount such that there are from 0.7 to 1.3, preferably from 0.95 to 1.05 equivalents of epoxy groups per equivalent of carboxyl groups in the carboxyl group-terminated polyesteramide.

22. Process for coating an article, preferably metallic, characterised in that a powdered thermosetting composition according to any of claims 18 to 21 is applied by spraying to said article, preferably by means of a triboelectric spray gun, and in that the coating thus obtained is cured at a temperature of from 140 to 220°C, preferably from 160 to 200°C, for a period of up to 30 minutes.

23. Articles coated entirely or partially by the process according to claim 22.

**Claims for the following Contracting State : ES**

1. Process for the preparation of polyesteramides which comprise thereaction products of at least one diamine and a carboxyl group-terminated polyester, characterised in that

    (1) first, a straight- or branched-chain carboxyl group-terminated polyester is prepared, from at least one aliphatic and/or cycloaliphatic dicarboxylic acid and at least one polyol in the molar proportions required to obtain carboxyl groups at the end of the chain, and
    (2) then, the carboxyl group-terminated polyester prepared in (1) is reacted with at least one diamine.

2. Process for the preparation of polyesteramides which comprise the reaction products of at least one diamine and a carboxyl group-terminated polyester, characterised in that

    (1) first, a straight- or branched-chain hydroxyl group-terminated polyester is prepared, from at least one aromatic and/or aliphatic and/or cycloaliphatic polycarboxylic acid and at least one polyol in the proportions required to obtain hydroxyl groups at the end of the chain;
    (2) then, the hydroxyl group-terminated polyester prepared in (1) is esterified with at least one dicarboxylic acid chosen from aliphatic dicarboxylic acids, cycloaliphatic dicarboxylic acids and isophthalic acid to obtain a carboxyl group-terminated polyester, and
    (3) finally, the carboxyl group-terminated polyester prepared in (2) is reacted with at least one diamine.

3. Process for the preparation of polyesteramides which comprise the reaction products of at least one diamine and a carboxyl group-terminated polyester, characterised in that

    (1) first, a straight- or branched-chain hydroxyl group-terminated polyester is prepared, from at least one aromatic and/or aliphatic and/or cycloaliphatic polycarboxylic acid and at least one polyol in the proportions required to obtain hydroxyl groups at the end of the chain;
    (2) then, the hydroxyl group-terminated polyester prepared in (1) is esterified with isophthalic acid in the proportions required to obtain a polyester containing both terminal hydroxyl and terminal carboxyl groups;
    (3) then, the polyester containing both terminal hydroxyl and terminal carboxyl groups prepared in (2) is esterified with at least one aliphatic and/or cycloaliphatic dicarboxylic acid to obtain a carboxyl group-terminated polyester, and
    (4) finally, the carboxyl group-terminated polyester prepared in (3) is reacted with at least one diamine.

4. Process according to any of claims 1 to 3, characterised in that the polyesteramides have an acid number of from 10 to 100 mg of KOH/g, advantageously of from 20 to 70 mg of KOH/g, and a number-average molecular weight of between 1,000 and 16,000, preferably between 1,500 and 8,500.

5. Process according to any of claims 1 to 4, characterised in that the diamine is a diprimary diamine, a disecondary diamine or a diamine which is both primary and secondary, preferably a diprimary diamine.

6. Process according to any of claims 1 to 5, characterised in that the diamine is an aliphatic, a cycloaliphatic or an aromatic diamine, preferably an aliphatic or a cycloaliphatic diamine.

7. Process according to any of claims 1 to 6, characterised in that the diamine is chosen from ethylenediamine, 1,3-propanediamine, 1,5-pentanediamine, 1,6-hexanediamine, the 1,2-, 1,3- and 1,4-cyclohexanediamines, 2,2-dimethyl-1,3-propanediamine, N-(2-aminoethyl)-1,2-ethanediamine, 3,3'-dimethyl-4,4'-diaminodicyclohexylmethane, 4,4'-diaminodicyclohexylmethane, 3,3'-dimethyl-4,4'-diaminodiphenylmethane and 4,4'-diaminodiphenylmethane, alone or in admixture.

8. Process according to any of claims 1 to 7, characterised in that the polyol is a dihydric to tetrahydric aliphatic, cycloaliphatic or aromatic polyol.

9. Process according to claim 8, characterised in that the polyol is chosen from neopentylglycol, ethyleneglycol, diethyleneglycol, 1,2-propanediol, 1,3-propanediol, 1,4-butanediol, 1,5-pentanediol, 1,6-hexanediol, neopentylglycol hydroxypivalate, bisphenol A, 1,4-cyclohexanedimethanol, 2,2-bis(4-hydroxycyclohexyl)-propane, trimethylolpropane, ditrimethylolpropane and pentaerythritol, alone or in admixture.

10. Process according to any of claims 1 to 9, characterised in that the aliphatic or cycloaliphatic di- or polycarboxylic acid is chosen from adipic acid, succinic acid, glutaric acid, sebacic acid, azelaic acid, the 1,2-, 1,3- and 1,4-cyclohexanedicarboxylic acids, tetrahydrophthalic acid, hexahydrophthalic acid, as well as from the anhydrides thereof, alone or in admixture.

11. Process according to any of claims 1 to 10, characterised in that the aromatic polycarboxylic acid is chosen from o-phthalic acid, isophthalic acid, terephthalic acid, 1,2,4-benzenetricarboxylic acid, and 1,3,5-benzenetricarboxylic acid, as well as from the anhydrides thereof, alone or in admixture.

12. Process according to any of claims 1 to 11, characterised in that the acid number of the carboxyl group-terminated polyester is from 20 to 200 mg of KOH/g, advantageously from 30 to 110 mg of KOH/g.

13. Process according to any of claims 2 to 12, characterised in that the hydroxyl number of the hydroxyl group-terminated polyester is from 30 to 400 mg of KOH/g, advantageously from 50 to 150 mg of KOH/g.

14. Process according to any of claims 3 to 13, characterised in that the difference between the hydroxyl number and the acid number of the polyester containing both terminal hydroxyl and terminal carboxyl groups prepared in (2) is between -100 and +100 mg of KOH/g, advantageously between -50 and +50 mg of KOH/g.

15. Process according to any of claims 3 to 14, characterised in that the molar ratio between the aliphatic and/or cycloaliphatic dicarboxylic acid used in (3) and the isophthalic acid used in (2) is in the range of from 1/99 to 99/1.

16. Process according to any of claims 1 to 15, characterised in that the amount of diamine used is between 1 and 20 parts by weight, preferably from 1 to 10 parts by weight per 100 parts by weight of carboxyl group-terminated polyesteramide.

17. Powdered thermosetting compositions, characterised in that they comprise

(a) a carboxyl group-terminated polyesteramide as prepared by a process according to any of claims 1 to 16 and
(b) a polyepoxy compound.

18. Compositions according to claim 17, characterised in that the polyepoxy compound is a solid monomer compound or a polymer resin which is solid at room temperature, containing an average of at least two epoxy groups.

19. Compositions according to any of claims 17 and 18, characterised in that the polyepoxy compound is triglycidyl isocyanurate or bisphenol A diglycidyl ether.

20. Compositions according to any of claims 17 to 19, characterised in that the polyepoxy compound is used in an amount such that there are from 0.7 to 1.3, preferably from 0.95 to 1.05 equivalents of epoxy groups per equivalent of carboxyl groups in the carboxyl group-terminated polyesteramide.

21. Process for coating an article, preferably metallic, characterised in that a powdered thermosetting composition according to any of claims 17 to 20 is applied by spraying to said article, preferably by means of a triboelectric spray gun, and in that the coating thus obtained is cured at a temperature of from 140 to 220°C, preferably from 160 to 200°C, for a period of up to 30 minutes.

22. Articles coated entirely or partially by the process according to claim 21.